(19) Europäisches Patentamt

European Patent Office

Office européen des brevets

(11) **EP 1 684 450 A2**

(12) **EUROPEAN PATENT APPLICATION**
published in accordance with Art. 158(3) EPC

(43) Date of publication:
26.07.2006 Bulletin 2006/30

(51) Int Cl.:
*H04H 1/00* (2006.01)     *H04B 1/06* (2006.01)
*H04J 3/00* (2006.01)     *H04N 5/44* (2006.01)

(21) Application number: 04792939.3

(22) Date of filing: 26.10.2004

(86) International application number:
**PCT/JP2004/015811**

(87) International publication number:
**WO 2005/043784 (12.05.2005 Gazette 2005/19)**

(84) Designated Contracting States:
**DE FI FR GB IT**

(30) Priority: **30.10.2003 JP 2003370555**
**11.12.2003 JP 2003413641**

(71) Applicant: **MATSUSHITA ELECTRIC INDUSTRIAL CO., LTD.**
**Kadoma-shi, Osaka 571-8501 (JP)**

(72) Inventors:
• **USUKI, Izumi**
**Matsushita Electr.Ind.Co.Ltd.**
**Chuoku**
**Osaka-shi**
**Osaka 540-6319 (JP)**
• **KAGEYAMA, Sadashi**
**Matsushita Electr.Ind.Co.Ltd.**
**Chuoku**
**Osaka-shi**
**Osaka 540-6319 (JP)**

• **KISODA, Akira**
**Matsushita Electr.Ind.Co.Ltd.**
**Chuoku**
**Osaka-shi**
**Osaka 540-6319 (JP)**
• **YOMO, Hidekuni**
**Matsushita Electr.Ind.Co.Ltd.**
**Chuoku**
**Osaka-shi**
**Osaka 540-6319 (JP)**

(74) Representative: **Eisenführ, Speiser & Partner**
**Patentanwälte Rechtsanwälte**
**Postfach 10 60 78**
**28060 Bremen (DE)**

(54) **DEVICE AND METHOD FOR RECEIVING BROADCAST WAVE IN WHICH A PLURALITY OF SERVICES ARE MULTIPLEXED**

(57) In communication transmitting a first stream (intermittent data portion) for burst transmission of packet sets and a second stream (continuous data portion) for transmitting packets at a speed determined by the transmission rate required for the service, the second stream related to the selected service is received and reproduced for the selected service when a service is selected until intermittent data transmitted in the first stream can be received, and reception and playback of the first stream begins when transmission of the intermittent data for the selected service in the first stream begins.

Fig.4

EP 1 684 450 A2

**Description**

Technical field

The present invention relates to reception technology for multiplexed broadcast signals carrying multiple services, and relates more particularly to a reception method and a reception apparatus for digital data broadcasts transmitted to portable terminals.

Background Art

The broadcasting method for terrestrial digital broadcasting in Europe is standardized by the ETSI (see DVB-T EN 300 477). This standard does not, however, support partial reception of broadcast segments as supported by the domestic Japanese standard (ARIB STD-B31, for example). In order for a portable terminal to receive a DVB-T broadcast, the terminal must therefore receive the entire signal in the same way as a set-top box or other stationary terminal, thus consuming much power. This creates problems for practical application, such as a shortened continuous playback time, because a portable terminal has a limited power supply capacity.

EP1337071A2 therefore teaches, as shown in Fig. 20, a method of compiling packets for one service into packet sets, transmitting the packet sets at high speed in a short period of time as data bursts 10, and broadcasting packet sets for each service in sequence so that packet sets do not become mixed with packet sets for a different service during the transmission of a single packet service.

Power consumption by the receiver is reduced by supplying power to the reception unit only while packet sets for the desired service are being transmitted. (This is referred to as the "time slice method" below.)

A problem with the time slice method is that content playback does not start for the number of seconds until the packet sets for the desired service are transmitted when the receiver is tuning to a particular channel after the power is turned on and when the channel is switched to a different service.

*** Patent document 1: EP1337071A2

Disclosure of the Invention

Problem to be Solved by the Invention

A problem with time slice broadcasting as described above is that there is a delay until the selected service can be reproduced when the channel is changed because data is transmitted in bursts, and smooth channel zapping is therefore not possible.

The present invention is directed to solving this problem of the prior art, and an object of the invention is to shorten the waiting time until playback begins by selectively receiving time slices and the zapping stream.

Means for Solving the Problem

A reception apparatus according to the present invention is a reception apparatus for receiving broadcast signals transmitted with multiple multiplexed services. The broadcast signal contains a first stream for burst-transmitting packet sets carrying content for each service, and a second stream for continuously transmitting packets carrying content for each service at a speed determined by the transmission rate required for the service. The reception apparatus has an operating section used by a user for specific operations, a reception section that receives a broadcast signal, and a playback means that decodes and reproduces the received data. A zapping mode is set as the operating mode until burst data for the first stream related to a selected service is received when one service is selected by the operating section, and operation is changed from the zapping mode to an intermittent reception mode when transmission of burst data for the first stream related to the selected service begins. The reception section receives data for the selected service in the second stream, and the playback section reproduces data from the received second stream in the zapping mode. The reception section receives data for the selected service in the first stream and the playback section reproduces data from the received first stream in the intermittent reception mode.

The second stream may contain data related to the same content as the first stream and having less data volume than data of the first stream. The second stream can be related data based on the content of the first stream, and the amount of data in the second stream can be less than the amount of data in the first stream. For example, the second stream can be a stream generated at a compression rate greater than that used to generate the first stream.

Further preferably, the reception apparatus also may have a buffer that temporarily stores received data of the first stream for reproduction. When changing from the intermittent reception mode to the zapping mode, burst data for the service being received in the intermittent reception mode just before the mode transition may be stored in the buffer until the user selects a different service in the zapping mode.

Yet further preferably, the reception apparatus also may have a buffer that temporarily stores received data of the first stream for reproduction. During the zapping mode the reception section receives data for all services in the first stream regardless of the selected service, and constantly updates the buffer with data for the received first stream.

Yet further preferably, the reception apparatus has a buffer temporarily stores received data of the first stream for reproduction, and buffer controls differs according to the type of button used to change the service in the zapping mode.

Yet further preferably, when the user executes a specific operation on the operating section indicating selection of a particular service, reproduction of first stream data begins in the intermittent reception mode.

Yet further preferably, the reception apparatus also has a demodulation means that demodulates the reception signal. When information indicating the continuation time of burst data for each service in the first stream is contained in the reception signal, power supply to the demodulation section stops after the continuation time passes after reception of the burst data for the selected service starts.

When the burst data includes multiple sections and each section contains interval time information from the start of data reception for one section to the start of reception of the next burst data for the same service, time from when one burst data is received until the next burst data for the same service is received is corrected based on the interval time information contained in each section.

Yet further preferably, the reception apparatus may determine the difference between the playback time of the first stream and the reproduction time of the second stream for the same service, and correct the reproduction time of the first stream based on said difference.

Yet further preferably, the first stream may contain audio data and video data, and the second stream may contain at least either still image data or audio data.

Yet further preferably, the second stream may be carried in the burst data of the first stream.

Further preferably, a reception apparatus according to the present invention also may have a buffer that temporarily stores received data of the second stream for reproduction. While burst data for the selected service is not being received, zapping data for another service is received and regularly stored to the buffer, and data for another service stored in the buffer is read and reproduced when another service is selected in the zapping mode.

Yet further preferably, information indicating the relationship between the first stream and second stream may be contained in the PMT (Program Map Table) of the PSI (Program Specific Information) carried by the first stream.

A reception method according to the present invention is a reception method for receiving broadcast signals transmitted with multiple multiplexed services.The broadcast signal contains a first stream for burst-transmitting packet sets carrying content for each service, and a second stream for continuously transmitting packets carrying content for each service at a speed determined by the transmission rate required for the service. The reception method sets a zapping mode as the operating mode until burst data for the first stream related to a selected service is received when one service is selected, changes from the zapping mode to an intermittent reception mode when transmission of burst data for the first stream related to the selected service begins, receives data for the selected service in the second stream and reproduces data from the received second stream in the zapping mode, and receives data for the selected service in the first stream and reproduces data from the received first stream in the intermittent reception mode.

Effects of the Invention

The present invention thus receives and reproduces broadcast signals transmitted with high quality burst data (a first stream) multiplexed with low quality continuous data (a second stream). Power consumption during normal viewing can thus be reduced by intermittently receiving the first stream, and when zapping viewing the waiting time during channel selection can be shorten by reproducing the continuous data (the second stream), which is constantly receivable. Furthermore, by transmitting still images, audio, or other low volume data type as the low quality data (the second stream), the low quality data can also be intermittently received during channel zapping and power consumption can thus be suppressed.

Brief Description of the Drawings

Fig. 1 schematically describes the content transmission method upon which the present invention is based.
Fig. 2 illustrates data allocation on the transmission channel in the present invention.
Fig. 3 describes the power supply control operation of a receiver according to the present invention.
Fig. 4 describes the reception method of a receiver according to the present invention during zapping reception.
Fig. 5 is a block diagram of a receiver according to a first embodiment of the present invention.
Fig. 6A is the first part of a flow chart showing the operation of a receiver according to the present invention.

Fig. 6B is the second part of a flow chart showing the operation of a receiver according to the present invention.

Fig. 7A is a flow chart showing the operation (the basic flow of the zapping operation) of a receiver in a first variation of the first embodiment of the invention.

Fig. 7B is a flow chart showing the operation (for processing low quality data) of a receiver in a first variation of the first embodiment of the invention.

Fig. 7C is a flow chart showing the operation (for buffer control) of a receiver in a first variation of the first embodiment of the invention.

Fig. 8 is a flow chart showing the operation (for buffer control) of a receiver in a second variation of the first embodiment of the invention.

Fig. 9 is a flow chart showing the viewing service determination process of a receiver in a third variation of the first embodiment of the invention.

Fig. 10A is a flow chart showing the operation (the basic flow of the zapping operation) of a receiver in a fourth variation of the first embodiment of the invention.

Fig. 10B is a flow chart showing the operation (for processing low quality data) of a receiver in a fourth variation of the first embodiment of the invention.

Fig. 11 describes burst data width.

Fig. 12 describes $\Delta t$ correction.

Fig. 13 describes a method of generating the signal received by the receiver in a seventh variation of the first embodiment of the invention.

Fig. 14 is a block diagram of a receiver according to a second embodiment of the present invention.

Fig. 15 describes the concept of signal reception by a receiver according to a second variation of the second embodiment of the invention.

Fig. 16 describes the concept of the transmission method in a third embodiment of the present invention.

Fig. 17 describes data allocation on the transmission channel in the transmission method of the third embodiment of the present invention.

Fig. 18 describes the reception method during channel zapping reception by a receiver for receiving signals broadcast by the transmission method of the third embodiment of the invention.

Fig. 19 is a block diagram of a receiver according to a fourth embodiment of the present invention.

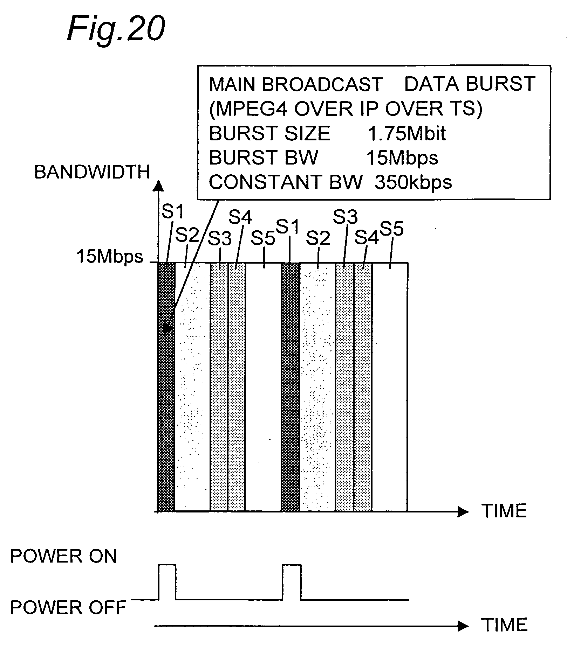

Fig. 20 schematically shows the transmission method of the prior art.

Fig. 21 describes converting IP packets to TS packets.

Fig. 22 shows multiplexing by a multiplexer.

[Reference Numerals]

| 1 | head end |
|---|---|
| 2-6 | content source for services S1 to S5 |
| 7 | IP packet |
| 8 | first processor |
| 9 | second processor |
| 10 | burst data |
| 11 | transport stream multiplexed with low quality data |
| 11sl to 11s5 | low quality data package |
| 12 | TS multiplexer |
| 13 | transmitter |
| 14 | transmission channel |
| 15 | zapping burst |
| 16 | time stamp offset detector |
| 20 | receiver |
| 21 | user interface (UI) |
| 22 | reception control unit |
| 23 | power supply control unit |
| 24 | OFDM demodulation unit |
| 25 | TS decoder |
| 26 | IP packet extraction unit |
| 27 | buffer |
| 28 | MPEG-4 decoder |

| 29 | mode display unit |
| 30 | still image acquisition unit |
| 31 | still image buffer |
| 32 | switch (SW) |
| 33 | communication line |
| 34 | zapping buffer |

Best Mode for Carrying out the Invention

A reception apparatus and reception method according to the present invention are described below with reference to the accompanying figures.

In order to describe a broadcast receiver according to the present invention, the method of broadcasting the transmission signal is described first. Operation of the receiver is then described with reference to the accompanying figures using reception during channel zapping by way of example. Note that "burst transmission" as used herein refers to transmitting content in short bursts or batches, and then stopping transmission for a brief period until the next burst is transmitted. Note that the processes described below can be achieved entirely in software.

(Content transmission method)

The present invention is predicated upon using the content transmission method described below whereby both intermittent and continuous content streams are multiplexed during transmission. "Intermittent transmission" as used herein refers to a method of compressing a signal containing video signals and/or audio signals in a specified presentation period Tin (of 5 seconds, for example) for high quality reproduction, and then transmitting the compressed signals during a time equal to 1/N (where N is a positive integer such as N = 36) of Tin. This enables time-division transmission of a maximum 36 different services (such as services for 36 television channels) during presentation period Tin, and sends a new video signal every presentation period Tin. A program broadcast over a particular channel or from a particular provider is referred to herein as a "service." This is referred to as intermittent transmission because the video signal for a particular service (such as the program broadcast on one channel) is intermittently transmitted every presentation period Tin. Continuous transmission is a method of transmitting a signal compressed for low quality reproduction during a period Tcon (approximately 23 ms) that is shorter than one frame (approximately 1/30 sec, for example).

This invention relates to a method of transmitting a stream containing both intermittently transmitted packets (a first stream) and continuously transmitted packets (a second stream).

Intermittent transmission alone enables viewing high quality video but requires a delay of approximately 5 seconds every time the service is changed. Intermittent transmission alone is thus not suited to "zapping" or "channel surfing," an operation whereby the viewer rapidly changes the service to find a desired service for viewing.

Continuous transmission alone, on the other hand, imposes no delay when the service is changed and thus enables the viewer to quickly see the video on the selected service.

By mixing intermittent transmission and continuous transmission, the present invention enables viewing the selected video or other service without delay even while zapping, and enables viewing the selected service with high quality when a desired service is found.

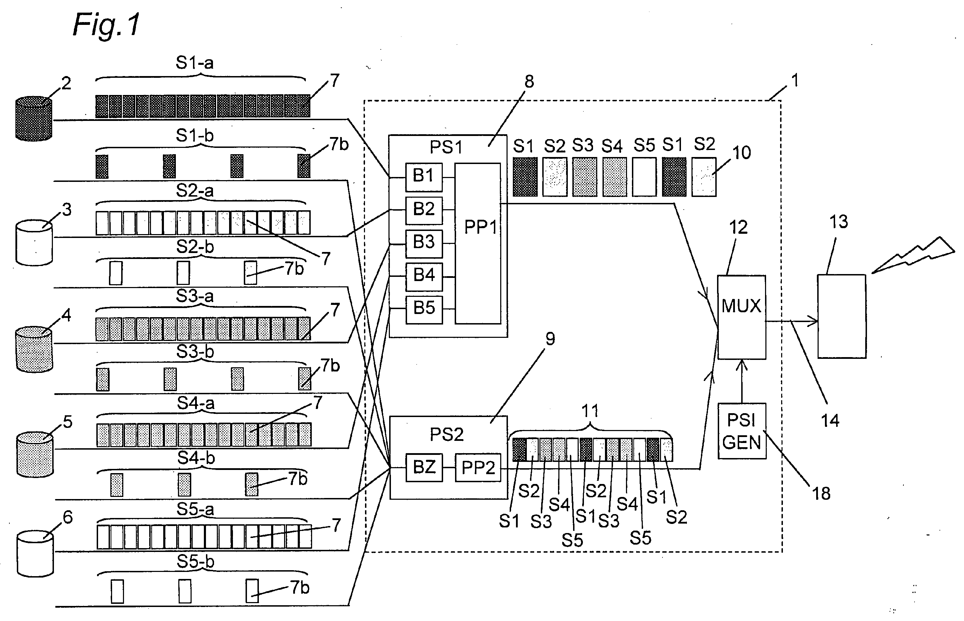

A preferred embodiment of a content transmission method according to the present invention is described below with reference to the accompanying figures using reception while channel zapping by way of example. Fig. 1 describes a method of generating the transmission signal output from the broadcasting station and received by a receiving apparatus according to this embodiment of the invention.

Reference numeral 1 is a digital broadcasting head end, and 2, 3, 4, 5, 6 are the content sources for services S1, S2, S3, S4, S5. The content of each service is encoded in both high quality and low quality, resulting in high quality IP (Internet Protocol) packet 7, and low quality IP packet 7b. Each content source has a high quality encoder for generating IP packets 7, and a low quality encoder for generating IP packets 7b, each encoder being a discrete real-time encoder. The high quality. encoder has an internal clock CLa indicating real time, and the low quality encoder has an internal clock CLb indicating real time. That the time kept by internal clock CLa and the time kept by internal clock CLb match will be obvious.

The same IP address is assigned to each IP packet 7 from the same content source, such as content source 2. If the content source is different, that is, if the service is different, the IP address is also different. The same IP address can also be used for both the high quality IP packets 7 and the low quality IP packets 7b, or different IP addresses can be used.

The high quality encoder is an MPEG-4 encoder that can compress content containing a video signal and/or audio signal at an average transfer rate of 350 kbps. The low quality encoder is an MPEG-4 encoder that can compress the same content at an average transfer rate of 64 kbps.

If the bandwidth of the actual broadcast signal is approximately 15 Mbps and (350 + 64 =) 414 kbps is required for one service, then (15000 ÷ 414 =) approximately 36 individual services can be carried. The use of MPEG-4 and the foregoing transfer rate are used by way of example only, and other transfer rates and compression methods can obviously be used.

The transfer rate and other parameters shall not be limited to the foregoing. Windows Media, QuickTime, JPEG-2000, or other compression method could also alternatively be used.

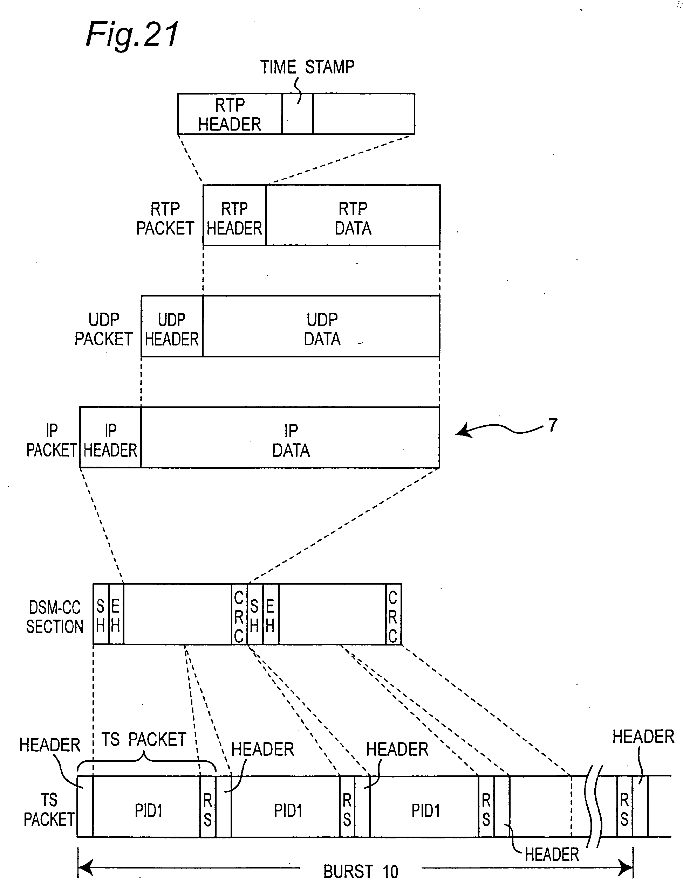

The high quality data is described first below using Fig. 21. Video and audio data compressed using MPEG-4 to an average transfer rate of 350 kbps is generated as RTP (real-time transport protocol) data, and an RTP header is thus added. A time stamp Ta is added to the RTP header for synchronization during sending and receiving. The RTP data and RTP header are stored in an RTP packet. The RTP packets are generated as UDP (user datagram protocol) data to which a UDP header is added. The UDP data and UDP header are stored in an UDP packet. The UDP packets are generated as IP data to which an IP header is added, and the IP data and IP header are stored in an IP packet 7.

The resulting high quality encoded IP packets 7 are input to the processor 8 shown in Fig. 1. The processor 8 has a number of buffers equal to the number of content sources. In the example shown in Fig. 1 there are five buffers B1, B2, B3, B4, B5, and each buffer can store the number of IP packets 7 (1163 IP packets in this example) equivalent to a specific presentation period Tin (5 seconds in this example). Because the IP packets are MPEG compressed, the actual storage time is approximately 5/36 second and not 5 seconds.

If IP packets 7 for service S1 equivalent to presentation period Tin are accumulated from buffer B1, the accumulated IP packets are sequentially sent to processing unit PP1. As shown in Fig. 21, the processing unit PP1 converts the IP packets 7 to DSM-CC (digital storage media command and control) sections, and then to TS (transport stream) packets. The TS packets have a fixed length (such as 188 bytes). Each TS packet starts with a TS header. Each TS header contains a packet ID, or PID, identifying the type of TS packet. The PID for TS packets carrying service S1 content, for example, is PID1.

Note that same PID is assigned to TS packets carrying data for the same service, and the PID for TS packets carrying service S2 content is thus PID2, the PID for TS packets carrying service S3 content is PID3, and so forth. A standard book such as ISO/IEC 13818-1, ISO/IEC 13818-6, or ETSI/DVB EN301192, for example, is used for conversion from IP packets to TS packets.

The multiple TS packets (packet set) identified by PID1 are then sequentially output. The group of TS packets 10 thus output for an approximately 5 second period are referred to as a burst. Block S1 output from processor 8 in Fig. 1 denotes a burst and contains continuous TS packets for an approximately 5 second presentation of service S1.

If IP packets 7 for service S2 equivalent to period Tin are accumulated in buffer B2, the accumulated IP packets are sequentially sent to processing unit PP1, converted thereby from IP packets to TS packets, and PID2 is assigned as the packet ID to each of the resulting TS packets. The multiple TS packets identified by PID2 are then sequentially output. Block S2 output from the processor 8 denotes a burst, and contains continuous TS packets for an approximately 5 second presentation of service S2.

TS packets for different services are thus output in bursts and sent to the multiplexer 12.

Low quality data is described next. IP packets 7b are generated from video data and audio data that is MPEG-4 compressed to an average transfer rate of 64 kbps using the same procedure applied to the high quality data as shown in Fig. 21. RTP packets are thus also contained in the IP packets 7b, and the IP packets 7b thus also contain a time stamp Tb for synchronization during sending and receiving.

The low quality encoded IP packets 7b are input to the processor 9 shown in Fig. 1. The processor 9 has one buffer Bz and stores IP packets 7b from all content sources in the sequence received. If all or part of the IP packets 7b from different content sources overlap the processor 9 could have a plurality of buffers similarly to the processor 8. The buffer capacity must only be sufficient to store one IP packet 7b. The IP packets 7b are sent to processing unit PP2, which converts the IP packets to TS packets in the same way as processing unit PP1. The same PID, such as PIDX, is assigned to all converted TS packets regardless of the service. PIDX is a unique PID that denotes a zapping TS packet. The TS packets from the processor 9 are sent to the multiplexer 12. A PSI generator 18 is connected to the multiplexer 12.

The same PID, such as PIDX, is assigned regardless of the service to all TS packets carrying low quality data in this example, but a PID that differs according to the service could be assigned in the same way as for transmitting high quality data without adversely affecting the effect of the present invention.

The format of the low quality data shall not be limited to containing both video and audio data, and could contain only one or any combination of video, still image, audio, and text data.

The format of the low quality data could also be dynamically determined according to such conditions as the number of bursts for simultaneous services and the average transfer rate.

The PSI generator 18 generates PSI (program specific information). PSI contains a PAT (a program association table), a PMT (program map table), a CAT (conditional access table), and a NIT (network information table). Each table is stored segmented in one or multiple TS packets. The conditional access function has no relationship to the present invention and further description of the CAT is therefore omitted below. The data structure of these tables is described below. The multiplexer 12 is described first.

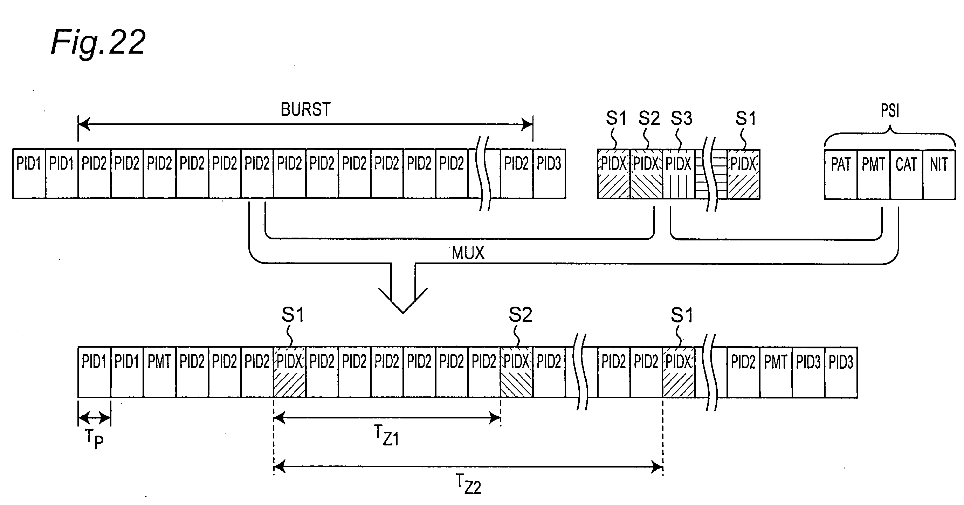

As shown in Fig. 22 the multiplexer 12 receives three types of input, that is, high quality TS packets from the processor 8, low quality TS packets from the processor 9, and PSI TS packets from the PSI generator 18, and combines these into a single stream. Note that only one PAT and NIT are set for all services, but a different PMT is defined for each service. Where the PAT, PMT, and NIT are inserted is defined by the standard book. The low quality TS packets are dispersedly inserted, but the time difference Tz1 between one low quality TS packet S1 and the next low quality TS packet S2 is approximately 0.65 msec. In addition, the time difference Tz2 between one low quality TS packet S1 and the next low quality TS packet S1 in the same service is approximately 23.5 msec. Note, further, that these time differences Tz1 and Tz2 will change if the transfer rate changes. The multiplexed stream is passed as transmission channel 14 to the transmitter 13 and output to the transmission path by the transmitter 13.

The data structure is described next.
The packet ID (PID) contained in the TS packet header is defined as follows according to the type of data stored in the TS packet.

High quality data TS packet: a different PID is defined for each service (a code denoting high quality may also be included)
Low quality data TS packet: the same PID is used for all services (a code denoting low quality may also be included)
PAT TS packet: 0X0000
PMT TS packet: a different PID is defined for each service (a code denoting a PMT may also be included)
NIT TS packet:0X0010

The value of the program number defined for each service is paired with the PID of the PMT defined for each service in the PAT. This data is written to the program_number area and the program_map_PID area in the PAT. If there are five services S1, S2, S3, S4, S5, for example, there are five PMTs. If the PIDs for these five PMTs are PMT-PID1, PMT-PID2, PMT-PID3, PMT-PID4, PMT-PID5, the PAT stores a correlation table such as shown in Table 1.

<Table 1>

| Service | PID of related PMT |
| --- | --- |
| S1 | PMT-PID1 |
| S2 | PMT-PID2 |
| S3 | PMT-PID3 |
| S4 | PMT-PID4 |
| S5 | PMT-PID5 |

The PID of the high quality TS packets for the service corresponding to the PMT are stored in the PMT. This data is written to the elementary_PID area of the PMT.

Therefore, once the service is identified, the PID for the PMT corresponding to that service can be read from Table 1, a particular PMT can be identified from the PID of the PMT, and once the PMT is determined, the TS packets containing the high quality data for that service can be determined.

The PMT also contains a descriptor. The descriptor is the value of the program number set for each service paired with the IP address of the IP packets carrying the service. For example, the IP address of the IP packet containing the data for service S1 is assigned to the PMT identified by PMT-PID1, and the IP address of the IP packet containing the data for service S2 is assigned to the PMT identified by PMT-PID2. A correspondence table linking services and IP addresses can thus be acquired from the five PMT. Note that the descriptor could be included in the NIT.

In addition, the foregoing information could be stored using SI (service information) instead of a PSI.

The PSI generator 18 can be disposed to the processor 8 so that the PSI is contained in the high quality TS packet stream, or disposed to the processor 9 so that the PSI is contained in the low quality TS packet stream.

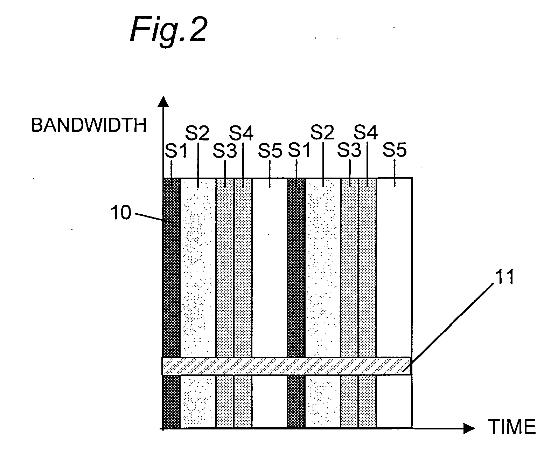

Fig. 2 shows the data allocation on the transmission channel 14. In practice SI or PSI is also transmitted but these are not shown in the figure because the SI and PSI are the same as those used in standard digital broadcasting.

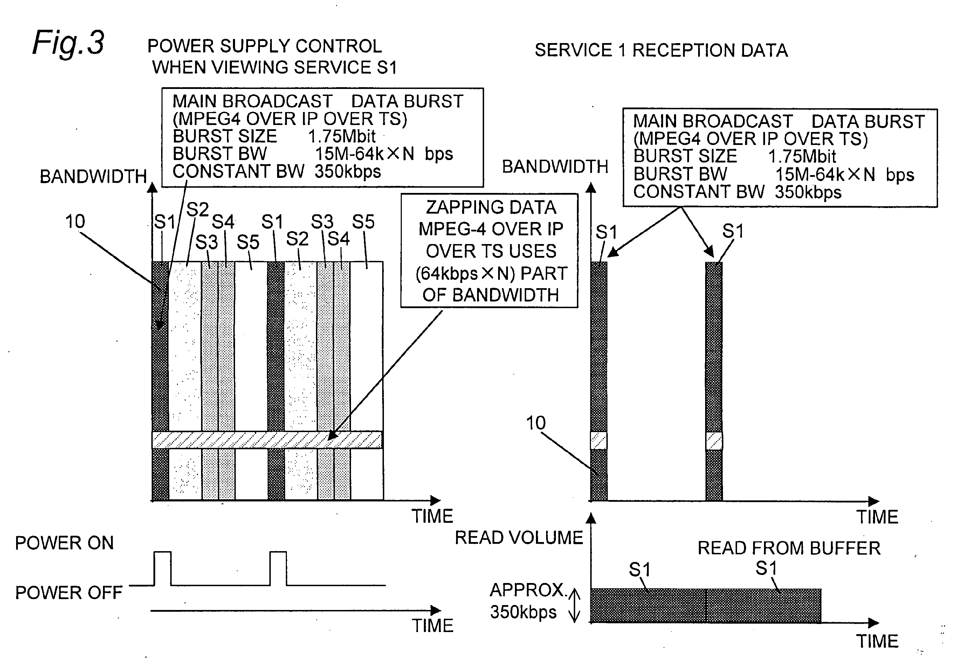

The reception method used to receive these foregoing signals is described next below with reference to the figures. Fig. 3 shows power supply control in the transmission method of the present invention when receiving high quality data for service S1.

High quality data for service S1 is broadcast in bursts as shown in Fig. 3. Because approximately 250 ms is required from when burst reception starts until packet output begins, the receiver starts supplying power to the demodulation unit approximately 250 ms before burst reception beings, and accumulates the reception data for service S1 transmitted in bursts to an internal buffer. Power supply to the demodulation unit stops after burst transmission ends, but power supply to the playback unit continues as the playback unit reads data from the buffer and reproduces the content at the rate required for reproduction. Power consumption can thus be suppressed. Intermittently receiving high quality data is thus referred to below as "the intermittent reception mode", and continuously receiving low quality data is referred to as "the zapping mode".

Embodiment 1

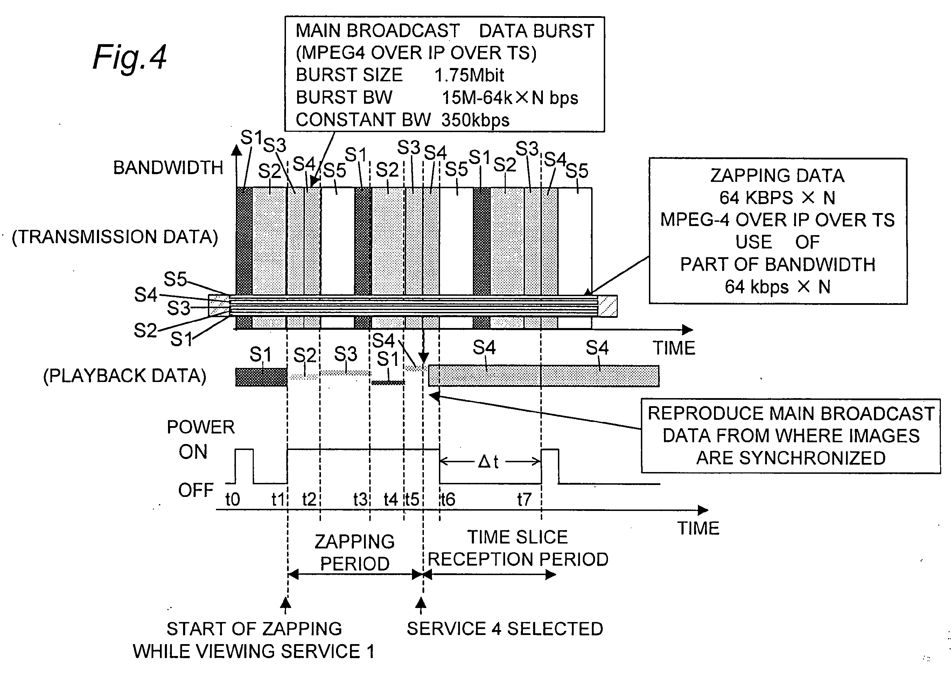

Fig. 4 describes a preferred embodiment of the reception method used during zapping reception in the present invention.

If service S1 is being received in the intermittent reception mode at time t0 and the user then operates a service selection button or other user interface control at time t1 to change the selected service to service S2, the power supply to the reception unit of the receiver turns on and the zapping mode is activated. Using the service-PID correlation table and the service-IP address correlation table acquired from the PSI or SI (the second loop of the PMT or NIT, for example), the receiver extracts the low quality data for service S2 from the low quality TS packet stream (also called "the zapping stream"), and begins playback. The receiver simultaneously waits to receive the high quality data bursts for service S2.

The user is preferably informed by means of an LED, indicator, audio, or an on-screen message, for example, that the receiver is operating in the zapping mode because low quality data is reproduced when in the zapping mode.

If the user then selects service S3 at time t2, the receiver extracts the low quality data for service S3 from the zapping stream, starts playback, and simultaneously waits to receive the high quality data burst for service S3. If the user then tunes into service S1 at time t3, the receiver extracts the low quality data for service S1 from the zapping stream, starts playback, and simultaneously waits to receive the high quality data burst for service S1.

Because the beginning of a burst for the tuned service is not detected in the burst data with the operation to this point, the receiver remains in the zapping mode.

If the user then selects service S4 at time t4, the receiver extracts the low quality data for service S4 from the zapping stream, starts playback, and waits to receive the high quality data burst for service S4.

When the service S4 burst is transmitted at time t5, service S4 burst reception starts immediately, high quality data playback begins, control switches to the burst reception mode, and power supply to the reception unit stops from time t6 to time t7 when the next service S4 burst is transmitted.

The correlation table for the services and PIDs of the TS packets carrying high quality data is carried in the SI or PSI in this embodiment of the invention, but the method of transmitting the correlation table shall not be so limited. More particularly, the correlation table can be transmitted in the burst 10 or transport stream 11, or over a communication line if the receiver has a communication line. This also applies to the correlation table for services and IP addresses of the IP packets for transmitting low quality data. A separate Internet path could also be used.

(Configuration and operation of the receiver)

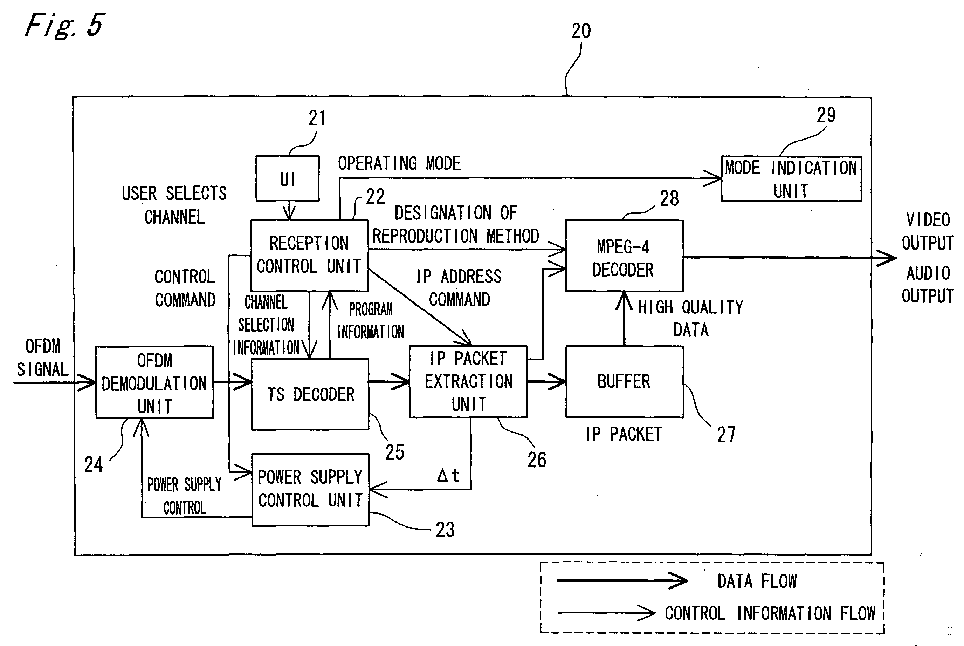

Fig. 5 is a block diagram of a receiver for implementing the reception method described above. The receiver 20 has a user interface (UI) 21, reception control unit 22, power supply control unit 23, OFDM demodulation unit 24, TS decoder 25, IP packet extraction unit 26, buffer 27, MPEG-4 decoder 28, and mode indication unit 29. The UI 21 accepts user operations (such as pushing a button), and passes corresponding operating information to the reception control unit 22. The mode indication unit 29 could be an LED, indicator, an audio output device, or a display capable of displaying telops, for example. The operation of the receiver 20 is described below.

When the user operates a service selection button that is part of the UI 21, or the receiver power turns on, the reception control unit 22 sets the operating mode to the zapping mode. The user can use the UI 21 to rapidly change (zapping process) the channel to find a desired service while the zapping mode is enabled. The reception control unit 22 instructs the power supply control unit 23 to supply power to the OFDM demodulation unit 24 in order to receive the service selected through the UI 21. The reception control unit 22 also sets frequency information, for example, for the service (channel) that was last received or the service previously determined to be received to the OFDM demodulation unit 24.

When the OFDM demodulation unit 24 turns on, the OFDM demodulation unit 24 receives the OFDM signal, decodes the TS packets from the received OFDM signal, acquires and outputs a PSI (or SI) containing the program configuration information through the TS decoder 25 to the reception control unit 22.
The reception control unit 22 interprets the PSI (or SI), extracts the service-PID correlation table and the service-IP packet correlation table, finds the PID (packet identifier) for the TS packets and the IP address of the IP packets in respect of low quality data, tells the TS decoder 25 what PID to decode, and sends the IP address of the IP packets carrying the low quality data for the selected service to the IP packet extraction unit 26.

The TS decoder 25 decodes the zapping stream for the service having the PID specified by the power supply control unit 23.
The IP packet extraction unit 26 extracts and sends the IP packets for the selected service from the decoded stream to the MPEG-4 decoder 28.

The MPEG-4 decoder 28 then starts reproducing the content based on the extracted IP packets.

Because low quality data is reproduced when in the zapping mode, the user is informed that the receiver is operating in the zapping mode by means of the mode indication unit 29. The mode indication unit 29 uses an LED, indicator, audio, or telop to inform the user that the receiver is operating in the zapping mode.

In addition, the reception control unit 22 interprets the PSI, identifies the PID of the packet transmitted in the burst data (time slice) containing the high quality data for the selected service, and reports this PID to the TS decoder 25. The TS decoder 25 then monitors whether the burst data for the selected service was received.

When reception of the burst data for the selected service is confirmed, the TS decoder 25 decodes the burst data. The IP packet extraction unit 26 extracts the specific time Δt until the next burst data for the selected service is received from the *MPE* section header, sets this time Δt in the power supply control unit 23, and reproduces and stores the IP packet in the buffer 27.

When a specific amount of data accumulates in the buffer 27, the buffered data is supplied to the MPEG-4 decoder 28 at the rate required for playback, the MPEG-4 decoder 28 reproduces the video and audio data, and the video and audio are output.

When playback of high quality data from the buffer 27 starts, playback of the low quality data for zapping that was being reproduced simultaneously stops. If the time Δt is set, the power supply control unit 23 shifts to the intermittent reception mode.

In the intermittent reception mode the power supply control unit 23 turns the power to the OFDM demodulation unit 24 off after reception of the previous burst data for the selected service ends and until reception of the next burst data begins (that is, until time Δt passes). When the time to receive the next burst data comes, the power supply control unit 23 turns the power to the OFDM demodulation unit 24 on again and thus begins receiving the next burst data for the selected service.

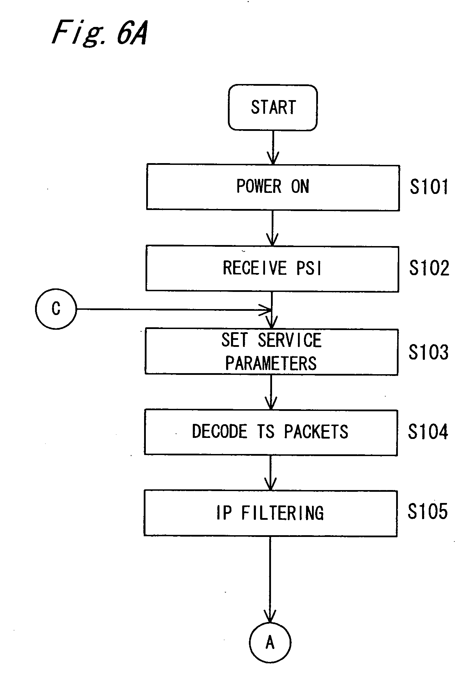

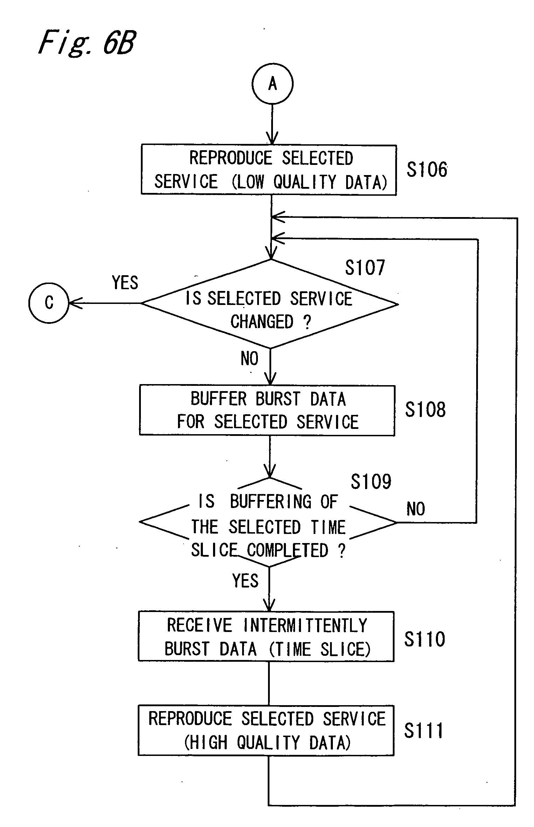

The operation of the receiver 20 is described in further detail below. Fig. 6A and Fig. 6B are a flow chart showing the reception process run by the receiver 20.

When the receiver 20 turns on (S101), an OFDM signal of a specific frequency is demodulated and the transport stream is reproduced. This specific frequency is the frequency of the channel that was last received by the receiver 20, or a predefined default frequency.

The TS decoder 25 then extracts the PSI (or SI) from the transport stream (S102). The service-PID correlation table, service-IP address correlation table, and the PID of the zapping stream are extracted from the NIT of this PSI (or SI), and a list of IP addresses for the IP packets carrying the data related to each service is acquired.

The service parameters are then set (S103). Specifically, the reception control unit 22 tells the TS decoder 25 the PID of the TS packets to be decoded, and tells the IP packet extraction unit 26 the IP address of the IP packets carrying the data for the selected service.

The specified packets are then decoded (S104). More specifically, the TS decoder 25 decodes and extracts the IP packets from the TS packets of the specified PID.

From these IP packets the IP packet extraction unit 26 then extracts the IP packets that are identified by the specified IP address and contain the content of the selected service (S105), and passes the extracted IP packets to the playback module including the MPEG-4 decoder 28 and buffer 27.

The playback module reproduces the content (S106), including the video and audio data for zapping, outputs to the screen and speakers, for example, and waits to receive the burst data containing the high quality data for the content being reproduced.

The reception control unit 22 then determines if a user request to switch to a different service was received from the UI 21 (S107). If there is no request to select a different service, the reception control unit 22 begins receiving the burst data (time slice) for the content of the selected service and stores the received burst data to the buffer 27 (S108).

When buffering the burst data ends (S109 returns yes), the receiver changes to the intermittent reception mode wherein the power of the reception module is intermittently controlled based on the time Δt contained in the burst data and denoting the transmission time of the next burst data (S110). Until a request to change the selected service is next received, operation thereafter continues to reproduce and output high quality content from the burst data instead of reproducing low quality content for zapping (S111).

If the zapping stream is composed of two or more streams, such as text and still image streams, which stream is reproduced could also be selected according to the user's choice or the capacity of the receiver.

The zapping content could also be low quality data derived by compressing high quality data at a high data compression rate, or still images and audio, or only audio, related to the content.

To reduce the change in playback quality when shifting from the zapping mode to the intermittent reception mode, switching from the zapping mode to the intermittent reception mode could also be made conditional upon first receiving multiple bursts of burst data for the selected service.

(Variation 1)

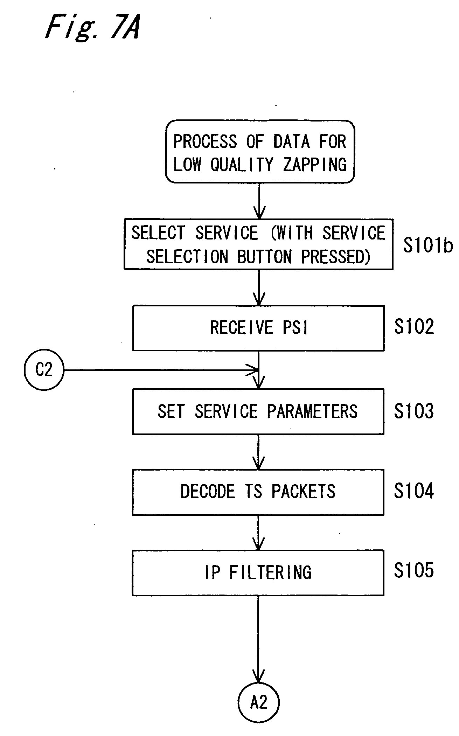

A variation of the process of storing data to the buffer 27 while in the zapping mode is described below with reference to Fig. 7A to Fig. 7C. When changing from the intermittent reception mode to the zapping mode in this embodiment, burst data for the service being received in the intermittent reception mode immediately before the service is changed continues being stored in the buffer 27 in the zapping mode until the user selects a different service.

Because the low quality zapping data process runs parallel to high quality burst data buffering control in this embodiment of the invention, processing zapping data and burst data buffering control are described separately below.

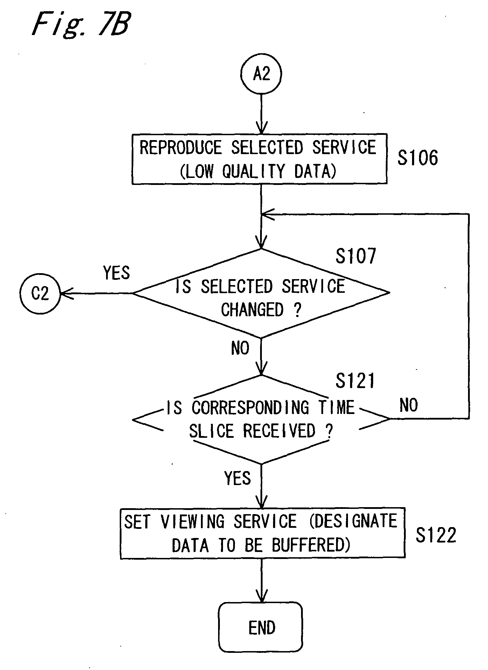

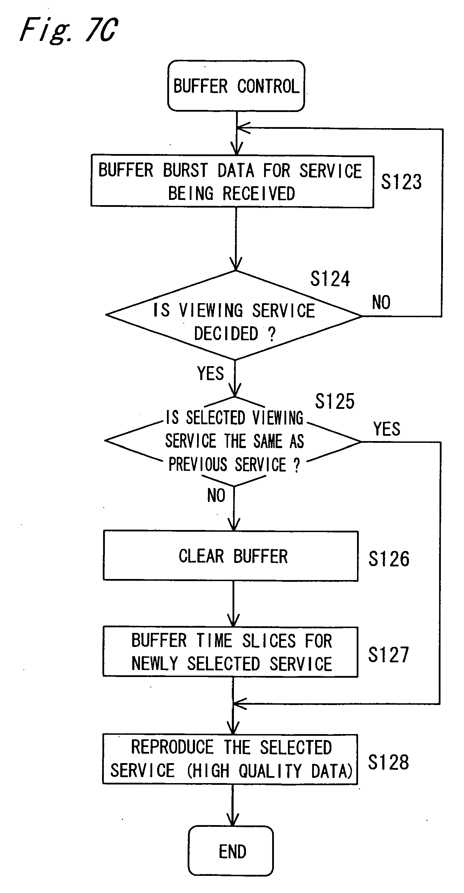

Processing low quality zapping data is described first with reference to Fig. 7A and Fig. 7B. When receiver power turns on or the user operates a service selection button to select a service, the zapping mode is activated, power is supplied to the OFDM demodulation unit 24, and demodulation of the entire broadcast signal begins (S101b).

The PSI (or SI) is then extracted from the transport stream (S102), and a list of zapping PIDs and burst data PIDs is acquired. A list of the IP addresses from which services are transmitted is also acquired from the transport stream.

The service parameters are then set (S103). Specifically, the reception control unit 22 tells the TS decoder 25 the PID of the packets to be decoded, and tells the IP packet extraction unit 26 the IP address of the IP packets carrying the data for the selected service.

The packets are then decoded (S104). More specifically, the TS decoder 25 decodes and extracts the IP packets of the specified PID.

From these IP packets the IP packet extraction unit 26 then extracts the IP packets that are identified by the specified IP address and contain the content of the selected service (S105), and passes the extracted IP packets to the playback module including the MPEG-4 decoder 28 and buffer 27.

The playback module reproduces the content (S106), including the video and audio data for zapping, outputs to the screen and speakers, for example, and waits to receive the burst data containing the high quality data for the content being reproduced.

The reception control unit 22 then determines if a user request to switch to a different service was received from the UI 21 (S107). If there is no request to select a different service, the reception control unit 22 begins receiving the burst data for the content (S121) and sets (determines) the service to be stored in the buffer 27 (that is, what is to be buffered) to the service currently being viewed (that is selected) (S122).

The burst data buffering process is described next with reference to Fig. 7C. The buffer 27 continues accumulating burst data for the service being received until immediately before zapping starts (S123). Whether the viewing service was determined in the previous step S122 is then determined (S124). If the viewing service was determined, whether the selected viewing service is the same as the service that was being viewed until zapping started is determined (S125). If they are the same service, the time slice for that service carries the data currently stored in the buffer. Control therefore goes to step S128 where high quality data playback starts, and the video, audio, and other content is output.

If the selected service is not the same as the service that was previously viewed (S125 returns no), the buffer 27 is cleared, burst data for the newly selected service is buffered (S127), and high quality data playback then begins (S128).

Content for the service that was being viewed immediately before zapping began thus continues to be buffered during zapping. As a result, if the service that was being viewed before zapping began is ultimately selected as the desired viewing service after checking what is available on other services in the zapping mode, the desired service can be quickly viewed again at high quality because the burst data for that service is already stored in the buffer 27.

(Variation 2)

This second variation is a further improvement of the buffering process described in the foregoing first variation. The zapping data process is identical to that described in Fig. 7A and Fig. 7B in the foregoing first variation, and further detailed description thereof is thus omitted below.

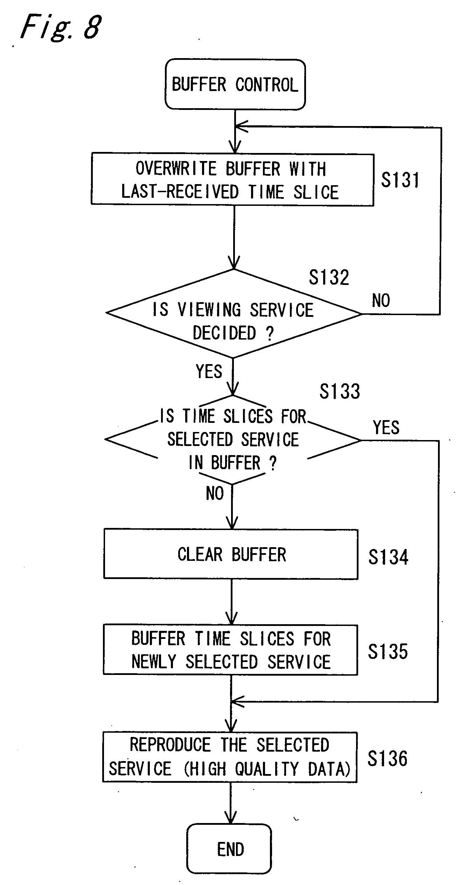

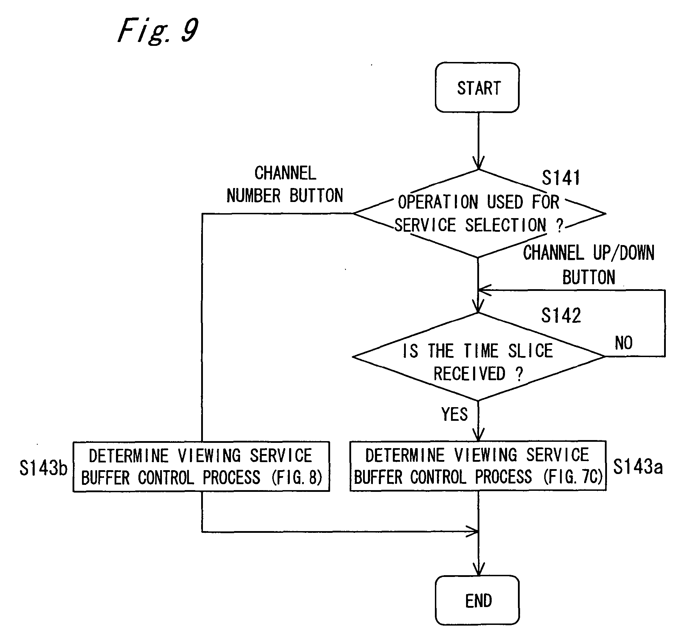

Buffer control in this variation of the invention is described next with reference to the flow chart in Fig. 8. When the reception control unit 22 is in the zapping mode and can receive all data, the reception control unit 22 receives the burst data for all time slices regardless of the service and stores the received burst data to the buffer 27 (S131). The last received time slice is thus overwritten in the buffer 27.

The reception control unit 22 determines if the viewing service was determined in the previous step S122 (S132). If the viewing service was determined, whether the selected viewing service is the same as the service that is currently stored in the buffer 27 is determined (S133). If they are the same service, the burst data for that service is already stored in the buffer 27 and high quality data playback thus starts (S136). The video, audio, and other content is thus output.

If the service of the data stored in the buffer 27 is not the same as the service selected for viewing (S133 returns no), the buffer 27 is cleared (S134), burst data for the service selected for viewing is stored in the buffer 27 (S135), high quality data playback begins (S136), and the intermittent reception mode is thus activated.

This variation thus receives all burst data (time slices) regardless of the selected service while in the zapping mode, and continually updates the buffer 27 with the received burst data. Therefore, if the burst data for the selected service is still in the buffer 27 when a service is selected for viewing while in the zapping mode, playback of the high quality data can begin immediately.

If the buffer has sufficient capacity, time slices for all services can be buffered and the buffer 27 can be selectively updated for each received service (that is, for blocks of data stored in the buffer 27). This variation of the invention is thus more likely to be able to quickly start playback using high quality data.

(Variation 3)

The condition for determining the service to be viewed in the zapping mode in the foregoing variation is that burst data (time slices) for the content being viewed in the zapping mode is received (see step S121 in Fig. 7B). The condition for setting the service to be viewed in this variation is that a clear directive (operation) is asserted by the user.

This embodiment of the invention adds a step for determining when the user changes the selected service if the service was changed because the user is finished viewing the currently selected service or whether the user simply wants to view (glance at) another service during a commercial, for example, and will continue viewing the currently selected service.

The former case is indicated by the user operating the channel number buttons when changing the service, and the latter case is indicated by the user operating the channel up/down buttons, for example. In other words, whether the operated button is a channel up/down button or a channel number button is determined. If a channel up/down button was operated, the same buffer process described in the foregoing first variation is run. If a channel number button was operated, the same process described in the above second variation is run. This is described more fully below with reference to the flow chart in Fig. 9.

Whether the service was changed by operating a channel number button or by operating a channel up/down button is first determined (S141). A service change initiated by operating a channel number button is interpreted to mean that the user intends to view a different service, and buffer control for updating the buffer 27 with the last received service as shown in the flow chart in Fig. 8 is applied (S143b).

A service change initiated by operating a channel up/down button is interpreted to mean that the user simply wants to briefly see a different service. A change of service is therefore not finalized, and reception waits for the burst data (time slice) for the selected service (S142). When burst data for the selected service is received, the buffer is controlled as shown in the flow chart in Fig. 7C to continue buffering data for the service selected before zapping began (S143a).

By appropriately selecting the buffer control process of either the first or second variation above according to the user's intent (as determined in step S141), high quality playback from the time slices can be quickly begun.

(Variation 4)

The condition for switching from low quality data playback in the zapping mode to high quality data playback in the foregoing variations is that the viewing service is set to the service enabled by receiving burst data (time slices) corresponding to the content viewed in the zapping mode (step S121 in Fig. 7B). However, when the service is changed according to this condition, playback of high quality data begins automatically if the same service is viewed for plural seconds in the zapping mode even though the user does not intentionally select the service for viewing. Playback quality thus changes abruptly, which may be disruptive to the viewer. This variation of the invention describes an arrangement solving this problem.

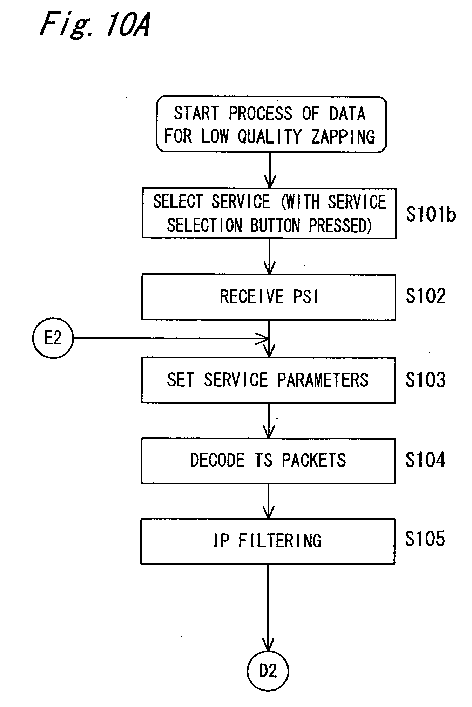

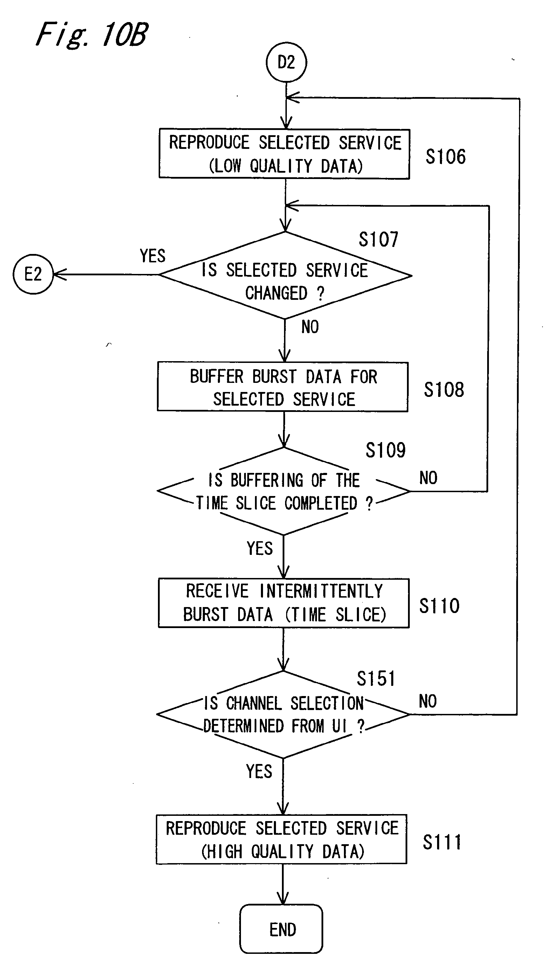

Fig. 10A and Fig. 10B are a flow chart of a process solving the foregoing problem. The procedure shown in Fig. 10A is the same as shown in Fig. 7A and further description thereof is thus omitted. The procedure shown in Fig. 10B is substantially the same as shown in Fig. 6B, but differs in that Fig. 10B has an additional step (S151) of determining whether input determining the channel selection due to a user operation was detected by the UI 22 [sic]. Step S151 determines, for example, whether a button determining the channel selection was operated on the UI 22 [sic] by the user. If the user operates a button determining the channel selection, the user is aware that the screen will then change to a high quality image and will thus not be jarred by a sudden change in image quality.

This embodiment thus starts playback in the high quality mode when burst data (time slices) corresponding to the content viewed during zapping is received and the user operates a button determining the channel selection (S151), thus preventing a sudden change in the playback image quality during the zapping mode, and thus reducing the jarring effect on the user of a sudden change in image quality while viewing.

(Variation 5)

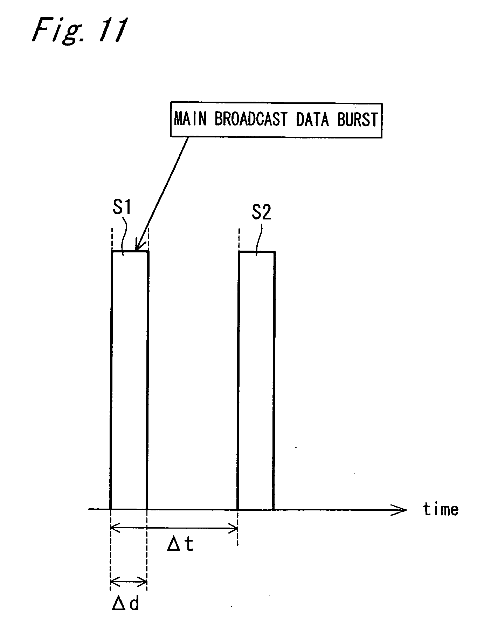

A reception method enabling intermittent reception during burst data playback is described next. Referring to Fig. 11, time $\Delta t$ is the time from when reception of one burst of data for the selected service ends to the time when reception of the next burst begins, and time $\Delta d$ is the time duration of one burst (that is, the time from the start to the end of reception). If times $\Delta t$ and $\Delta d$ are transmitted in a field in each data burst (such as in the section header in the TS stream of each burst) and the reception control unit 22 receives a signal carrying the burst data duration time $\Delta d$, the reception control unit 22 sets both time $\Delta t$ and time $\Delta d$ in the timer of the power supply control unit 23 so that the power supply to the OFDM demodulation unit 24 is stopped after time $\Delta d$ passes.

This simplifies power supply control for burst reception because finding the ends of the data bursts being received is not necessary.

(Variation 6)

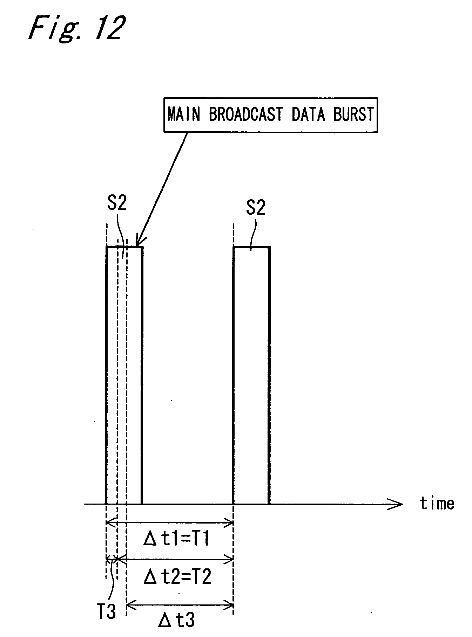

An improved variation for correcting the value of the time $\Delta t$ used for burst data reception is described next. The actual burst data is composed of a plurality of sections and the time (time $\Delta t$) required until the next data burst is received is contained in each section of burst data. In the example shown in Fig. 12, the required time $\Delta t1$, $\Delta t2$, and $\Delta t3$ is set for each of the three sections, and this time information is transmitted in the burst data.

In this situation the receiver 20 calculates the new required time $\Delta t$ as $((T1-T3)+T2)/2$ where the required time $\Delta t1$ acquired from the first section of burst data is T1, the required time $\Delta t2$ acquired from the second section is T2, and the time elapsed from when required time $\Delta t1$ is acquired to when required time $\Delta t2$ is acquired is T3. This minimizes transmission jitter in required time $\Delta t$.

(Variation 7)

An improved embodiment enabling seamless switching from playback of low quality image data to playback of high quality image data is described next.

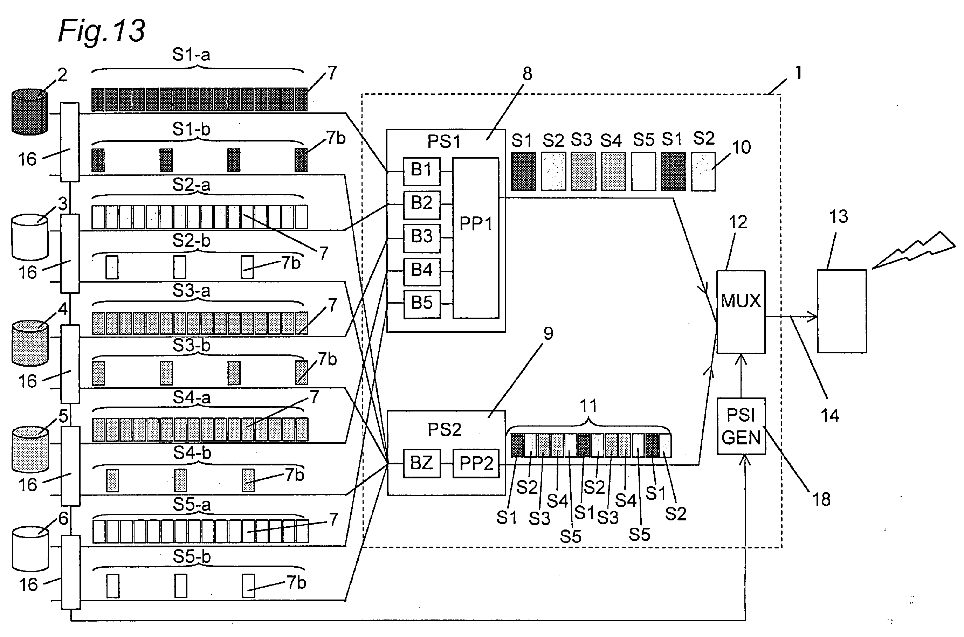

Fig. 13 describes transmission signal generation in the present invention. The process is basically the same as shown in Fig. 1, and differs in having an additional process related to a time stamp offset. Primarily these differences are described below.

As described above, services S1, S2, S3, S4, S5 are supplied from content sources 2, 3, 4, 5, 6. The content provided by each content source is encoded in both high quality and low quality versions for each service and provided in IP packets 7 and 7b. This embodiment of the invention provides a time stamp offset detector 16 for each of the content sources 2, 3, 4, 5, 6.

Time-dependent data is normally transferred as stream data using the RTP (real-time transport protocol) or other protocol supporting time information (time stamp) for data playback, and a different time stamp is therefore written by respective encoders to two streams of coincident content.

The time stamp offset detector 16 detects the time difference $\Delta T$ between the time stamp Ta added to the high quality data RTP header and indicating the image presentation time and the time stamp Tb added to the low quality data RTP header and similarly indicating the presentation time as the time stamp offset. This time difference $\Delta T$ is input to the PSI generator 18 and transmitted in the PSI (or SI) or low quality data stream. The PMT descriptor contains the time difference $\Delta T$ paired with the value of the program number set for each service.

This time difference $\Delta T$ is sent to the receiver. The receiver adds time difference $\Delta T$ to or subtracts time difference $\Delta T$ from the time stamp Tb of the low quality data, and thus synchronizes the video in the high quality data and low quality data. Alternatively, the receiver could add time difference $\Delta T$ to or subtract time difference $\Delta T$ from the time stamp Ta of the high quality data to similarly synchronize the video in the high quality data and low quality data streams.

A reception method used when a signal containing this time offset is broadcast is described next with reference to Fig. 4.

If the user selects service S4 at time t4, the receiver 20 extracts the low quality data for service S4 from the zapping stream, starts playback, and waits to receive the high quality burst data for service S4. When burst data for service S4 is transmitted at time t5, the receiver 20 immediately begins receiving the service S4 burst data.

Then, using the time slice offset ($\Delta ts = ts1 - ts2$) denoting the difference between the time stamp (ts2) contained in the low quality data and the time stamp (ts1) contained in the high quality data, the time stamp (tsa) contained in the high quality data is correct to a value on the time base of the low quality data.

$$tsa = ts1 - \Delta ts = ts1 - (ts1 - ts2) = ts2$$

Playback of the high quality data then begins at a time equal to or greater than this corrected value.

When burst reception ends, the intermittent reception mode is activated and power supply to the OFDM demodulation unit 24 stops from time t6 to time t7 when the next burst of service S4 data is transmitted.

This method enables synchronizing the time stamps for two streams of different quality, and enables a smooth transition from playback of low quality data in the zapping mode to playback of high quality data in the intermittent reception mode.

The time stamp offset information is transmitted in the low quality data in this example but could be transmitted in the high quality data instead.

Furthermore, if the stream is an MPEG-2 transport stream, the PCR (Program Clock Reference) can be used instead of a time stamp.

Embodiment 2

This embodiment of the invention transmits still images and audio data as the low quality data, and is otherwise the same as the first embodiment.

More specifically, the high quality data is video and audio data MPEG-4 compressed to an average transfer rate of 350 kbps, and the low quality data is composed of a still image and audio data stream representing the same content as the high quality data compressed to a 64-kbps average transfer rate. Note that the foregoing parameter values and compression method are used by way of example only for brevity, and shall not limit the parameters that can be used in the present invention.

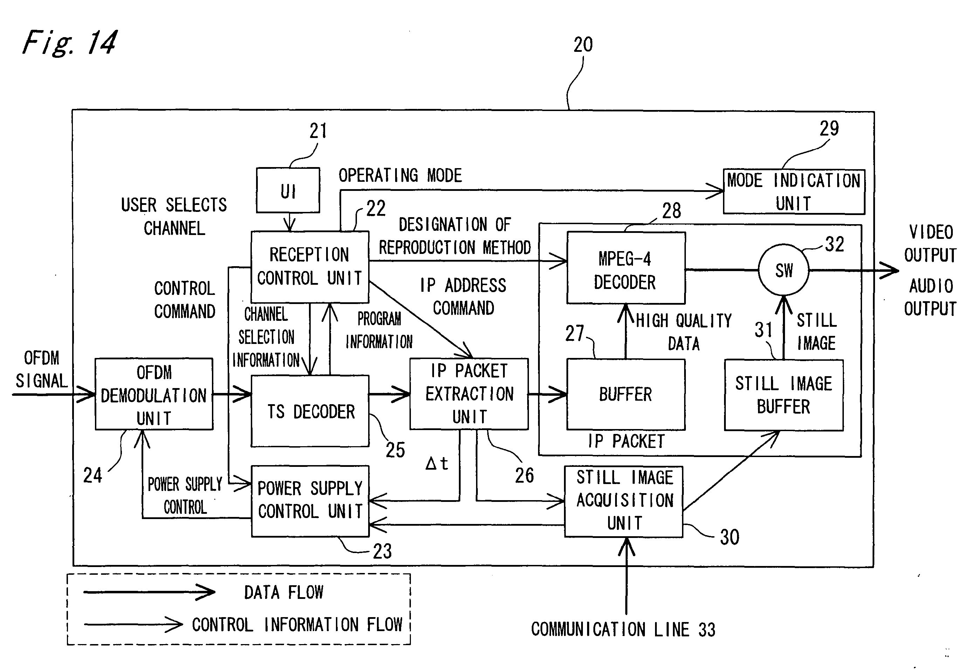

Fig. 14 shows the arrangement of a receiver used to receive the foregoing signals. In addition to the parts of the receiver 20 shown in Fig. 5, the receiver 20 shown in Fig. 14 has a still image acquisition unit 30, still image buffer 31, and switch 32. The basic operation is the same as the receiver 20 shown in Fig. 5.

The still image buffer 31 stores still image data. A communication line 33 is connected to the still image acquisition unit 30 so that data can be acquired from a peripheral device or over a network.

The switch 32 selects and outputs data from the MPEG-4 decoder 28 as the video output when in the intermittent reception mode, and when in the zapping mode selects and outputs still image data from the still image buffer 31 as the video output.

The still image acquisition unit 30 in this embodiment reproduces still images from the IP packets extracted by the IP packet extraction unit 26 when in the zapping mode, and stores the still images in the still image buffer 31 as low quality data for zapping. For the audio portion of the zapping data, the MPEG-4 decoder decodes and reproduces the audio IP packets extracted by the IP packet extraction unit 26. Images from the still image buffer are then presented on the mode indication unit 29 of the receiver and the audio is output from speakers, for example.

By thus transmitting still images as the low quality data for zapping, the audio playback quality of the zapping mode can be improved compared with the audio quality that is possible when video is transmitted as low quality data for zapping.

The zapping data could alternatively be limited to only audio data or only still image data. If only audio is transmitted, for example, the receiver 20 acquires still images relating to the service over the communication line 33. More specifically, the receiver 20 acquires still images or other information related to the service over the communication line 33 either in advance or when the zapping mode is selected, and stores the still images in the still image buffer 31. When the zapping mode is then selected the receiver 20 presents the still images stored in the still image buffer 31 on screen in conjunction with the audio. Because a communication charge is normally incurred for data acquisition over a communication line 33, a means of controlling the operation of the receiver 20 so that the user is so informed and the acquisition process begins after user confirmation is received is preferably provided.

The still image acquisition unit 30 could be a receiver with a still image extraction function. In this case the still image acquisition unit 30 receives burst data (a time slice) for a particular service at a specific frequency (such as once in ten minutes for a service transmitting a ten minute video), extracts suitable still images from the received burst data, and writes the still images to the still image buffer 31 for zapping. One method of extracting still images from burst data is to extract the I-pictures, for example. This method also enables outputting still images and audio in the zapping mode.

(Variation)

This variation describes an improvement of the reception method when still images are transmitted as the zapping data.

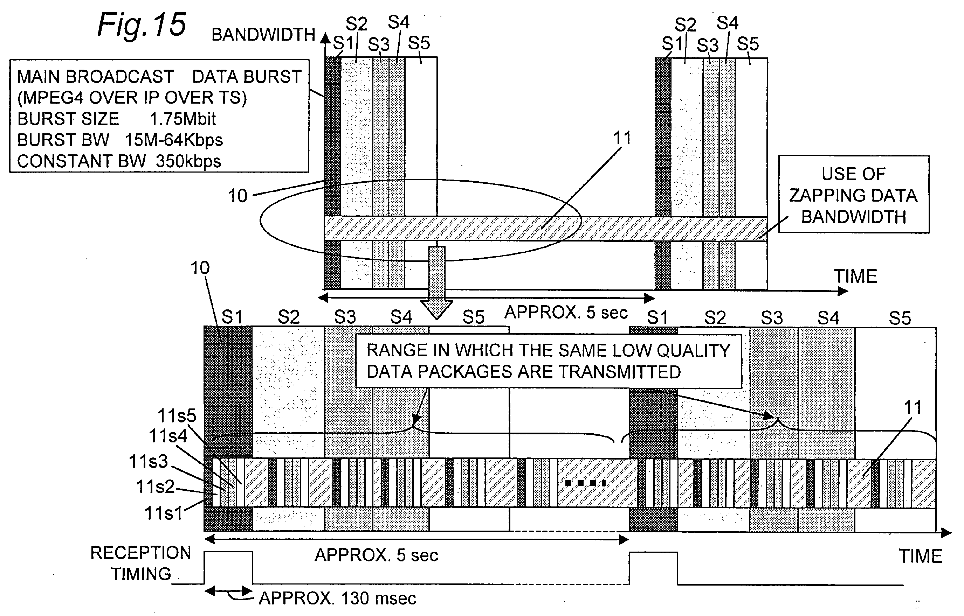

Fig. 15 shows the data allocation on the transmission channel 14.

The burst data (time slice) 10 shown in Fig. 15 carries high quality data for services S1 to S5. The burst data is acquired by MPEG-4 compression of the video and audio data at a 350-kbps average transfer rate. Low quality data packages 11s1 to 11s5 for zapping services S1 to S5 contain approximately 2 kbyte of still image data representing the video transmitted in each data burst (time slice) for services S1 to S5, and approximately 5 seconds of audio data containing the audio transmitted in one data burst (time slice) of high quality data compressed to approximately 8 kbps.

A plural number of services is transmitted in one time slice when transmitted mixed with DVB-T standard signals as in this example. As a result, low quality data packages 11s1 to 11s5 for all services S1 to S5 can be transmitted in one continuous time slice period (approximately 130 msec) in zapping stream 11 at a 64 kbps average transfer rate.

The receiver 20 can receive low quality data packages for zapping for all other services simultaneously to receiving the burst data for the selected service. The OFDM demodulation unit 24 therefore does not need to remain constantly on in order to receive the low quality data packages for zapping, power can thus be supplied to the OFDM demodulation unit 24 only during burst data reception (see Fig. 15), and still images and audio can be output without waiting.

Embodiment 3

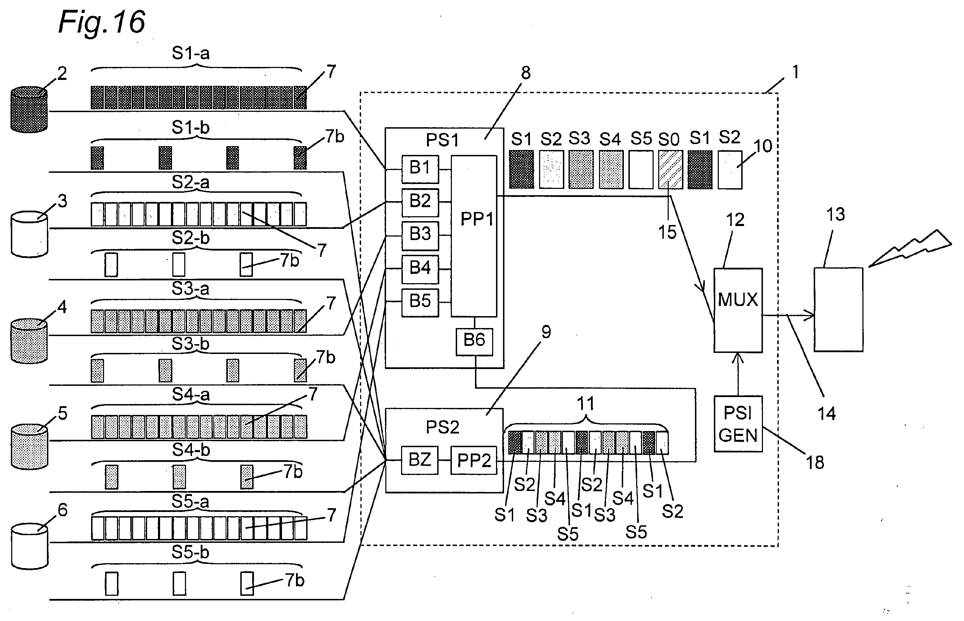

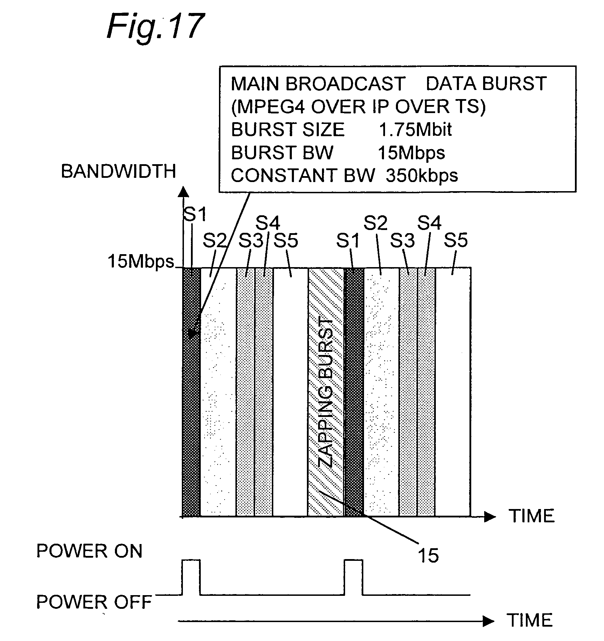

Fig. 16 describes transmission signal generation in this embodiment of the invention. The arrangement shown in Fig. 16 differs from the arrangement in Fig. 1 in that the output of the second processor 9 is input to the first processor 8 instead of to the TS multiplexer 12, and a buffer B6 is added to the first processor 8. Fig. 17 describes data allocation on the transmission channel. As will be known from Fig. 16 and Fig. 17, this embodiment of the invention transmits the low quality data used for presentation during the zapping mode as burst data similarly to the high quality data.

In Fig. 16 the services S1, S2, S3, S4, S5 supplied from content sources 2, 3, 4, 5, 6 are encoded in both high quality and low quality versions and provided in IP packets 7 and 7b.

The IP packets 7 encoded for high quality are generated as described in the foregoing embodiments. The IP packets 7b encoded for low quality are described below.

The low quality encoded IP packets 7b are input to the second processor 9, encapsulated in transport stream packets, and transport packets for all services S1 to S5 are multiplexed to a continuous transport stream 11. The transport stream 11 containing low quality data is input to the first processor 8.

An approximately 5-second portion of the low quality TS packet stream 11 input from the second processor 9 to the first processor 8 is input to the buffer B6 and output from the first processor 8 as a single burst 15. The first processor 8 generates broadband burst data 15 for short-term zapping from the transport stream 11 containing low quality data using the same process applied to the high quality data. The burst 15 contains TS packet block S0 for zapping. This TS packet block S0 is equivalent to the low quality TS packet stream 11 and has the same PID address.

Time information denoting the timing at which the corresponding high quality data burst is transmitted is inserted to the section storing the zapping burst 15. A plurality of bursts 10 and zapping bursts 15 are transmitted in sequential bursts to the multiplexer 12. The multiplexer 12 multiplexes the burst data with the four tables PAT, PMT, CAT, and NIT generated by the PSI generator 18.

The broadcast channel thus contains high quality data composed of bursts for each service and one burst of low quality data for zapping.

As shown in Fig. 17, high quality data composed of bursts for each service and one burst of low quality data for zapping is thus transmitted on the transmission channel 14 in this embodiment of the invention.

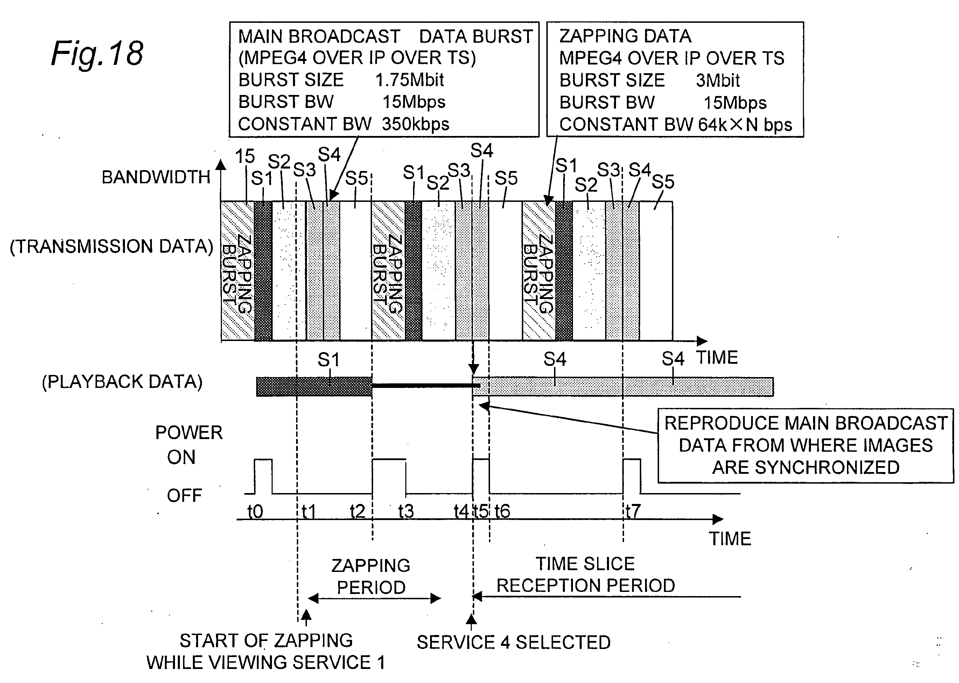

A reception method for receiving signals broadcast in the foregoing transmission system is described next with reference to Fig. 18. In this example the high quality data is video and audio data MPEG-4 compressed to a 350-kbps average transfer rate, and the low quality data contains the same content as the high quality data with the video and audio data MPEG-4 compressed to a 64-kbps average transfer rate. Note that the foregoing parameter values and compression method are used by way of example only for brevity, and shall not limit the parameters that can be used in the present invention.

Referring to Fig. 18, service S1 is selected and received at time t0 in the intermittent reception mode. When the user then operates the channel buttons or other UI 21 at time t1 to select service S2, the power supply to the OFDM demodulation unit 24 turns on and the zapping mode is activated.

Playback of service S1 then continues because the zapping burst data 15 has not be transmitted and zapping burst data 15 is thus not received at time t2. After the zapping burst data 15 is received at time t2, the receiver extracts and reproduces the low quality data for service S2 from the zapping burst data 15 as long as service S2 is selected. When service S3 is then selected by the user at time t3, the receiver extracts and begins to reproduce the low quality data for service S3 from the zapping burst data 15.

When service S4 is then selected by the user at time t4, the receiver extracts and begins to reproduce the low quality data for service S4 from the zapping burst data 15. When the receiver detects that burst data for service S4 is being transmitted at time t5, the receiver immediately begins to receive the burst data for service S4, begins high quality data playback, and shifts to the burst reception mode. Power supply to the OFDM demodulation unit 24 is then stopped from time t6 to time t7 when the next data burst for service S4 is transmitted.

Information (Δt) relating to the time t7 when reception should begin again is contained in the burst data for service S4 and can thus be known from the received data. The low quality data could be the high quality data compressed at a high data compression rate, or a combination of still image and audio data, or only audio data, or only still image data related to the content.

Furthermore, transmitting time information (Δt) indicating how much time until burst data carrying the next high quality data burst is transmitted in the zapping burst data 15 carrying the low quality data also enables a smooth transition from the zapping mode to the intermittent reception mode.

While content images cannot be display immediately after the zapping mode is activated and display must wait until the zapping burst data is received, the display can be changed immediately when the channel is changed while in the zapping mode because the zapping burst data is already being received.

The zapping burst data could also be regularly received and stored in the buffer during normal viewing (in the intermittent reception mode), that is, when not in the zapping mode. The wait until images can be displayed when changing the service in the zapping mode can thus be eliminated. How frequently burst data for zapping is received during normal viewing could also be set by the user. This reduces unnecessary reception of burst data for zapping, and thus reduces power consumption.

Embodiment 4

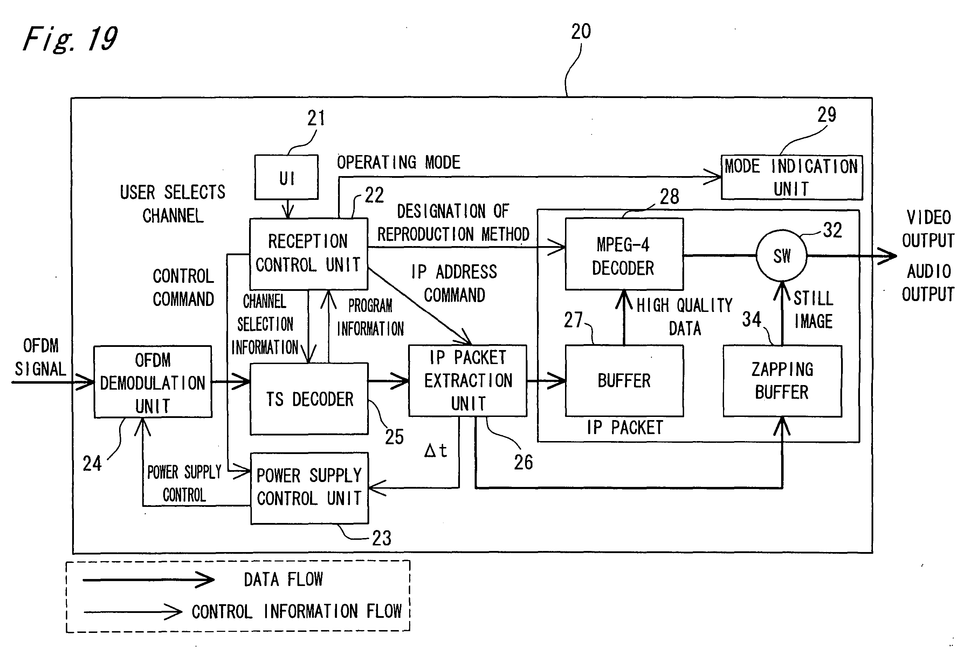

Fig. 19 is a block diagram showing a receiver according to another embodiment of the invention. This embodiment adds a zapping buffer 34 and switch 32 to the arrangement shown in Fig. 5. The zapping buffer 34 can be a removable recording medium.

The zapping buffer 34 stores zapping data including low quality data used for the image display when in the zapping mode. The switch 32 changes the image displayed by the receiver. More specifically, the switch 32 selects and outputs high quality image data from the MPEG-4 decoder 28 when in the intermittent reception mode, and selects and outputs the low quality image data (such as still image data) read from the zapping buffer 34 when in the zapping mode. The audio signal decoded by the MPEG-4 decoder 28 is output in both the intermittent reception mode and zapping mode.

When reception is changed to a different service in the zapping mode, time is required to acquire the zapping data for the different service due to the tuning process of the tuner, for example. This embodiment of the invention describes an arrangement enabling smoothly switching the display when the service is changed in the zapping mode.

This embodiment receives zapping data for other services when burst data (time slices) for the selected service (channel) is not being received, and regularly writes the received zapping data to zapping buffer 34. When a different service (channel) is then selected in the zapping mode, the data for that service stored in the zapping buffer 34 is read and reproduced. The display can thus be quickly switched to a different service in the zapping mode. The audio and still image data stored in the zapping buffer 34 is preferably converted to and stored in a format requiring less storage space.

So that the receiving side can process the received data without distinguishing high quality data and low quality data, the IP address of the IP packets is preferably different for each service in each of the foregoing embodiments. IP packets such as S1-a, S1-b having the same content preferably have the same IP address. Different IP addresses could, however, be assigned to the IP packets carrying the high quality data and low quality data versions of the same content.

Furthermore, when a plurality of zapping streams (such as a zapping stream for text and a zapping stream for still images) is transmitted, multiple records of zapping stream data could be written in the PMT.

The foregoing embodiments have been described using a zapping stream for multiple services carried on one channel, but the same effect can be achieved when multiple channels are transmitted and a zapping stream is carried on each channel.

Furthermore, if zapping data for the service transmitted on a first channel is transmitted multiplexed to the zapping stream of the second channel when services are received using multiple transmission channels, the zapping data contained in the first channel can be viewed when receiving the second channel by using the zapping stream in the second channel.

Although the present invention has been described in connection with the preferred embodiments thereof with reference to the accompanying drawings, various changes and modifications will be apparent to those skilled in the art. Such changes and modifications are to be understood as included within the scope of the present invention as defined by the appended claims, unless they depart therefrom.

Industrial Applicability

The present invention enables smoothly changing the displayed images during zapping or channel surfing in which the user quickly changes the channel to find a desired service, and can be applied to a receiver, such as a portable terminal having a digital broadcast reception function, for receiving digital data broadcasts transmitted with multiple multiplexed services.

**Claims**

1. A reception apparatus for receiving broadcast signals transmitted with multiple multiplexed services, wherein the broadcast signal contains a first stream for burst-transmitting packet sets carrying content for each service, and a second stream for continuously transmitting packets carrying content for each service at a speed determined by the transmission rate required for the service;
   the reception apparatus comprises an operating section used by a user for specific operations, a reception section that receives a broadcast signal, and a playback section that decodes and reproduces the received data;
   a zapping mode is set as the operating mode until burst data for the first stream related to a selected service is received when one service is selected by the operating section, and operation is changed from the zapping mode to an intermittent reception mode when transmission of burst data for the first stream related to the selected service begins;
   in the zapping mode, the reception section receives data for the selected service in the second stream, and the playback section reproduces data from the received second stream; and
   in the intermittent reception mode, the reception section receives data for the selected service in the first stream and the playback section reproduces data from the received first stream.

2. The reception apparatus according to claim 1, wherein the second stream contains data related to the same content as the first stream and having less data volume than data of the first stream.

3. The reception apparatus according to claim 1, further comprising a buffer that temporarily stores received data of the first stream for reproduction,
   wherein when changing from the intermittent reception mode to the zapping mode, the buffer stores burst data for the service being received in the intermittent reception mode just before the mode transition until the user selects a different service in the zapping mode.

4. The reception apparatus according to claim 1, further comprising a buffer that temporarily stores received data of the first stream for reproduction;
   wherein during the zapping mode, the reception section receives data for all services in the first stream regardless of the selected service, and constantly updates the buffer with the received data of the first stream.

5. The reception apparatus according to claim 1, further comprising a buffer that temporarily stores received data of the first stream for reproduction;
   wherein control of the buffer differs according to the type of button used to change the service in the zapping mode.

6. The reception apparatus according to claim 1, wherein when the user executes a specific operation on the operating section indicating selection of a particular service, reproduction of the data of the first stream begins in the intermittent reception mode.

7. The reception apparatus according to in claim 1, further comprising a demodulation section that demodulates the reception signal, wherein
   when information indicating duration of the burst data for each service in the first stream is contained in the reception signal, power supply to the demodulation section is terminated after the duration passes after reception of the burst data for the selected service starts.

8. The reception apparatus according to claim 1, wherein when the burst data comprises multiple sections and each section contains interval time information from start of data reception for the section to start of reception of the next burst data for the same service, time from when one burst data is received until the next burst data for the same service is received is corrected based on the interval time information contained in each section.

9. The reception apparatus according to claim 1, wherein difference between reproduction time information of the first stream and reproduction time information of the second stream for the same service is determined, and the reproduction time of the first stream is corrected based on the difference.

10. The reception apparatus according to claim 1, wherein the first stream contains audio data and video data, and the second stream contains at least either of still image data and audio data.

11. The reception apparatus according to claim 1, wherein the second stream is carried in the burst data of the first stream.

12. The reception apparatus according to claim 1, further comprising a buffer that temporarily stores received data of the second stream for reproduction; and
while burst data for the selected service is not being received, zapping data for another service is received and regularly stored to the buffer, and data for another service stored in the buffer is read and reproduced when another service is selected in the zapping mode.

13. The reception apparatus according to claim 1, wherein information indicating the relationship between the first stream and second stream is contained in the PMT (Program Map Table) of the PSI (Program Specific Information) carried by the first stream.

14. A reception method for receiving broadcast signals transmitted with multiple multiplexed services, wherein
the broadcast signal contains a first stream for burst-transmitting packet sets carrying content for each service, and a second stream for continuously transmitting packets carrying content for each service at a speed determined by the transmission rate required for the service;
the reception method comprising:

setting a zapping mode as the operating mode until burst data for the first stream related to a selected service is received, when one service is selected,
changing from the zapping mode to an intermittent reception mode when transmission of burst data for the first stream related to the selected service begins;
in the zapping mode, receiving data for the selected service in the second stream, and reproducing data from the received second stream; and
in the intermittent reception mode, receiving data for the selected service in the first stream and reproducing data from the received first stream.

15. The reception method according to claim 14, wherein the second stream contains data related to the same content as the first stream and having less data volume than data of the first stream.

*Fig.1*

EP 1 684 450 A2

18

Fig.2

# Fig.3

POWER SUPPLY CONTROL
WHEN VIEWING SERVICE S1

SERVICE 1 RECEPTION DATA

BANDWIDTH

MAIN BROADCAST   DATA BURST
(MPEG4 OVER IP OVER TS)
BURST SIZE       1.75Mbit
BURST BW          15M-64k×N  bps
CONSTANT BW  350kbps

10

S1  S2  S4  S1  S3  S5
    S3  S5      S2  S4

ZAPPING DATA
MPEG-4 OVER IP
OVER TS USES
(64kbps×N) PART
OF BANDWIDTH

TIME

POWER ON

POWER OFF

TIME

BANDWIDTH

MAIN BROADCAST   DATA BURST
(MPEG4 OVER IP OVER TS)
BURST SIZE       1.75Mbit
BURST BW          15M-64k×N  bps
CONSTANT BW  350kbps

S1            S1

10

TIME

READ VOLUME

READ FROM BUFFER

S1            S1

APPROX.
350kbps

TIME

EP 1 684 450 A2

## Fig.4

MAIN BROADCAST  DATA BURST
(MPEG4 OVER IP OVER TS)
BURST SIZE      1.75Mbit
BURST BW          15M-64k×N bps
CONSTANT BW   350kbps

ZAPPING DATA
64 KBPS × N
MPEG-4 OVER IP OVER TS
USE   OF
PART OF BANDWIDTH
64 kbps × N

BANDWIDTH

(TRANSMISSION DATA)

S1 S3
S2  S4 S5    S1    S3 S4    S1 S2 S3 S4 S5
                S2         S5

S5
S4
S3
S2  S1

TIME

(PLAYBACK DATA)

S1    S2   S3   S4
                S1    S4    S4

REPRODUCE MAIN BROADCAST
DATA FROM WHERE IMAGES
ARE SYNCHRONIZED

POWER
ON

OFF   t0    t1   t2    t3   t4 t5   t6      t7

TIME

Δt

ZAPPING
PERIOD

TIME SLICE
RECEPTION PERIOD

TIME

START OF ZAPPING
WHILE VIEWING SERVICE 1

SERVICE 4 SELECTED

EP 1 684 450 A2

*Fig. 5*

20

21

29

MODE INDICATION UNIT

OPERATING MODE

UI

USER SELECTS CHANNEL

22

DESIGNATION OF REPRODUCTION METHOD

28

RECEPTION CONTROL UNIT

MPEG-4 DECODER

VIDEO OUTPUT

AUDIO OUTPUT

CONTROL COMMAND

IP ADDRESS COMMAND

CHANNEL SELECTION INFORMATION

PROGRAM INFORMATION

HIGH QUALITY DATA

OFDM SIGNAL

OFDM DEMODULATION UNIT

TS DECODER

IP PACKET EXTRACTION UNIT

BUFFER

24

25

26

IP PACKET

27

POWER SUPPLY CONTROL

POWER SUPPLY CONTROL UNIT

Δt

23

DATA FLOW

CONTROL INFORMATION FLOW

EP 1 684 450 A2

*Fig. 6A*

```
                    ┌──────────┐
                    │  START   │
                    └──────────┘
                          │
                          ▼
        ┌──────────────────────────────┐
        │         POWER ON             │  S101
        └──────────────────────────────┘
                          │
                          ▼
        ┌──────────────────────────────┐
        │         RECEIVE PSI          │  S102
        └──────────────────────────────┘
                          │
   ┌───┐                  │
   │ C │─────────────────►▼
   └───┘    ┌──────────────────────────────┐
           │        SET SERVICE            │  S103
           │        PARAMETERS             │
           └──────────────────────────────┘
                          │
                          ▼
        ┌──────────────────────────────┐
        │       DECODE TS PACKETS       │  S104
        └──────────────────────────────┘
                          │
                          ▼
        ┌──────────────────────────────┐
        │         IP FILTERING          │  S105
        └──────────────────────────────┘
                          │
                          ▼
                        ┌───┐
                        │ A │
                        └───┘
```

*Fig. 6B*

```
                    ( A )
                      │
                      ▼
        ┌─────────────────────────┐
        │   REPRODUCE SELECTED     │  S106
        │ SERVICE (LOW QUALITY DATA)│
        └─────────────────────────┘
                      │
                      ▼
              S107
   YES        ◇─────────────────◇
 ( C ) ◄──────  IS SELECTED SERVICE
              ◇    CHANGED ?    ◇
                      │
                      NO
                      ▼
        ┌─────────────────────────┐
        │     BUFFER BURST DATA    │  S108
        │   FOR SELECTED SERVICE   │
        └─────────────────────────┘
                      │
                      ▼
              S109
           ╱  IS  BUFFERING OF  ╲     NO
         ╱    THE SELECTED TIME   ╲──────
         ╲    SLICE COMPLETED ?   ╱
           ╲                    ╱
                      │
                     YES
                      ▼
        ┌─────────────────────────┐
        │   RECEIVE INTERMITTENTLY │  S110
        │   BURST DATA (TIME SLICE)│
        └─────────────────────────┘
                      │
                      ▼
        ┌─────────────────────────┐
        │ REPRODUCE SELECTED SERVICE│ S111
        │    (HIGH QUALITY DATA)   │
        └─────────────────────────┘
```

## *Fig. 7A*

```
        ┌─────────────────────────┐
        │ PROCESS OF DATA FOR     │
        │ LOW QUALITY ZAPPING     │
        └─────────────────────────┘
                    │
                    ▼
    ┌─────────────────────────────┐
    │ SELECT SERVICE (WITH SERVICE │   S101b
    │ SELECTION BUTTON PRESSED)    │
    └─────────────────────────────┘
                    │
                    ▼
    ┌─────────────────────────────┐
    │        RECEIVE PSI           │   S102
    └─────────────────────────────┘
  (C2)──────────────────▶│
                    ▼
    ┌─────────────────────────────┐
    │    SET SERVICE PARAMETERS    │   S103
    └─────────────────────────────┘
                    │
                    ▼
    ┌─────────────────────────────┐
    │     DECODE TS PACKETS        │   S104
    └─────────────────────────────┘
                    │
                    ▼
    ┌─────────────────────────────┐
    │       IP FILTERING           │   S105
    └─────────────────────────────┘
                    │
                    ▼
                  (A2)
```

## Fig. 7B

```
                    ( A2 )
                       │
                       ▼
        ┌──────────────────────────────┐
        │  REPRODUCE SELECTED SERVICE  │   S106
        │      (LOW QUALITY DATA)      │
        └──────────────────────────────┘
                       │
                       ▼ ◄──────────────────────┐
                                      S107       │
     YES        ╱╲ IS SELECTED SERVICE ╲          │
  ( C2 ) ◄──────   CHANGED ?                      │
                  ╲╱                              │
                       │ NO                       │
                       ▼             S121         │
                   ╱IS CORRESPONDING TIME╲   NO   │
                  ╱  SLICE RECEIVED ?     ╲───────┘
                   ╲                      ╱
                       │ YES
                       ▼
        ┌──────────────────────────────┐
        │  SET VIEWING SERVICE (DESIGNATE │   S122
        │     DATA TO BE BUFFERED)      │
        └──────────────────────────────┘
                       │
                       ▼
                 ┌───────────┐
                 │    END    │
                 └───────────┘
```

## Fig. 7C

```
          ┌─────────────────┐
          │  BUFFER CONTROL │
          └─────────────────┘
                   │
                   ▼
   ┌─────────────────────────────┐
   │ BUFFER BURST DATA FOR SERVICE│  S123
   │      BEING RECEIVED          │
   └─────────────────────────────┘
                   │
                   ▼           S124
              ◇─────────────◇        NO
             ╱  IS VIEWING   ╲ ─────────────►
             ╲  DECIDED ?    ╱
              ◇─────────────◇
                   │
                  YES
                   ▼           S125
              ◇─────────────◇
             ╱ IS SELECTED    ╲       YES
             ╱ VIEWING SERVICE ╲ ──────────►
             ╲ THE SAME AS      ╱
             ╲ PREVIOUS SERVICE?╱
              ◇─────────────◇
                   │
                   NO
                   ▼
   ┌─────────────────────────────┐
   │        CLEAR BUFFER          │  S126
   └─────────────────────────────┘
                   │
                   ▼
   ┌─────────────────────────────┐
   │  BUFFER TIME SLICES FOR      │  S127
   │  NEWLY SELECTED SERVICE      │
   └─────────────────────────────┘
                   │
                   ▼
   ┌─────────────────────────────┐
   │  REPRODUCE THE SELECTED      │  S128
   │  SERVICE (HIGH QUALITY DATA) │
   └─────────────────────────────┘
                   │
                   ▼
              ┌─────────┐
              │   END   │
              └─────────┘
```

# Fig. 8

```
        ┌──────────────────┐
        │  BUFFER CONTROL  │
        └──────────────────┘
                 │
                 ▼
    ┌────────────────────────┐
    │  OVERWRITE BUFFER WITH  │  S131
    │ LAST-RECEIVED TIME SLICE│
    └────────────────────────┘
                 │
                 ▼            S132
          ╱────────────────╲           NO
         ╱  IS VIEWING SERVICE ╲──────────────┐
         ╲   DECIDED ?      ╱                  │
          ╲────────────────╱                   │
                 │ YES                          │
                 ▼              S133            │
          ╱────────────────╲                    │
         ╱ IS TIME SLICES FOR ╲    YES           │
         ╲  SELECTED SERVICE  ╱────────────┐     │
         ╲    IN BUFFER ?   ╱              │     │
          ╲────────────────╱               │     │
                 │ NO                       │     │
                 ▼                          │     │
    ┌────────────────────────┐              │     │
    │      CLEAR BUFFER       │  S134        │     │
    └────────────────────────┘              │     │
                 │                          │     │
                 ▼                          │     │
    ┌────────────────────────┐              │     │
    │  BUFFER TIME SLICES FOR │  S135        │     │
    │  NEWLY SELECTED SERVICE │              │     │
    └────────────────────────┘              │     │
                 │◄─────────────────────────┘     │
                 ▼                                 │
    ┌────────────────────────────┐                │
    │  REPRODUCE THE SELECTED     │  S136          │
    │ SERVICE (HIGH QUALITY DATA) │                │
    └────────────────────────────┘                │
                 │                                 │
                 ▼                                 │
          ┌──────────┐                             │
          │   END    │                             │
          └──────────┘                             │
```

# Fig. 9

```
                                              ┌──────────┐
                                              │  START   │
                                              └────┬─────┘
                                                   │
                                                   ▼              S141
         CHANNEL                        ◇ OPERATION USED FOR ◇
     NUMBER BUTTON ◄────────────────────  SERVICE SELECTION ?
                                                   │
                                                   │      CHANNEL UP/DOWN
                                                   │           BUTTON
                                                   ▼
                                                         S142
                                        ◇ IS THE TIME SLICE ◇      NO
                                        ◇    RECEIVED ?     ◇ ────►
                                                   │
                                                  YES
                                                   ▼
  S143b ┌────────────────────────┐   ┌────────────────────────────┐ S143a
        │ DETERMINE VIEWING SERVICE│   │ DETERMINE VIEWING SERVICE  │
        │ BUFFER CONTROL PROCESS   │   │ BUFFER CONTROL PROCESS     │
        │       (FIG. 8)           │   │       (FIG. 7C)            │
        └────────────┬─────────────┘   └──────────────┬─────────────┘
                     └────────────────────────────────►
                                                   │
                                                   ▼
                                              ┌──────────┐
                                              │   END    │
                                              └──────────┘
```

## Fig. 10A

```
┌─────────────────────────────┐
│   START PROCESS OF DATA     │
│  FOR LOW QUALITY ZAPPING    │
└─────────────────────────────┘
             │
             ▼
┌─────────────────────────────┐
│ SELECT SERVICE (WITH SERVICE │   S101b
│  SELECTION BUTTON PRESSED)  │
└─────────────────────────────┘
             │
             ▼
┌─────────────────────────────┐
│        RECEIVE PSI          │   S102
└─────────────────────────────┘
  (E2) ──────────►│
             ▼
┌─────────────────────────────┐
│    SET SERVICE PARAMETERS   │   S103
└─────────────────────────────┘
             │
             ▼
┌─────────────────────────────┐
│      DECODE TS PACKETS      │   S104
└─────────────────────────────┘
             │
             ▼
┌─────────────────────────────┐
│        IP FILTERING         │   S105
└─────────────────────────────┘
             │
             ▼
           (D2)
```

## Fig. 10B

(D2)

REPRODUCE SELECTED SERVICE
(LOW QUALITY DATA)          S106

S107

YES

(E2) ←          IS SELECTED SERVICE
CHANGED ?

NO

BUFFER BURST DATA FOR
SELECTED SERVICE          S108

S109

IS BUFFERING OF THE
TIME SLICE COMPLETED ?          NO

YES

RECEIVE INTERMITTENTLY
BURST DATA (TIME SLICE)          S110

S151

IS CHANNEL SELECTION
DETERMINED FROM UI ?          NO

YES

REPRODUCE SELECTED SERVICE
(HIGH QUALITY DATA)          S111

END

## Fig. 11

MAIN BROADCAST DATA BURST

S1     S2

time

Δt

Δd

## Fig. 12

MAIN BROADCAST DATA BURST

S2                                    S2

time

$\Delta t1 = T1$

$\Delta t2 = T2$

T3

$\Delta t3$

Fig.13

EP 1 684 450 A2

*Fig. 14*

# Fig.15

BANDWIDTH

MAIN BROADCAST   DATA BURST
(MPEG4 OVER IP OVER TS)
BURST SIZE     1.75Mbit
BURST BW   15M-64Kbps
CONSTANT BW   350kbps

USE OF ZAPPING DATA BANDWIDTH

10

11

S1 S2 S3 S4 S5

TIME

APPROX. 5 sec

RANGE IN WHICH THE SAME LOW QUALITY DATA PACKAGES ARE TRANSMITTED

10

S1 S2 S3 S4 S5

11s5
11s4
11s3
11s2
11s1

RECEPTION TIMING

APPROX. 5 sec

TIME

APPROX. 130 msec

EP 1 684 450 A2

Fig.16

# Fig.17

MAIN BROADCAST DATA BURST
(MPEG4 OVER IP OVER TS)
BURST SIZE 1.75Mbit
BURST BW 15Mbps
CONSTANT BW 350kbps

BANDWIDTH

S1

S2 S3 S4 S5     S1 S2 S3 S4 S5

15Mbps

ZAPPING BURST

TIME

15

POWER ON

POWER OFF

TIME

## Fig.18

MAIN BROADCAST　DATA BURST
(MPEG4 OVER IP OVER TS)
BURST SIZE　　1.75Mbit
BURST BW　　　15Mbps
CONSTANT BW　350kbps

ZAPPING DATA
MPEG4 OVER IP OVER TS
BURST SIZE　　3Mbit
BURST BW　　　15Mbps
CONSTANT BW 64k×N bps

BANDWIDTH

15　S2　S4
S1　S3　S5　　S1　S2　S3　S4　S5　　S1　S2　S3　S4　S5

(TRANSMISSION DATA)

ZAPPING BURST　　ZAPPING BURST　　ZAPPING BURST

S1　　　　S4　　　S4　TIME

(PLAYBACK DATA)

REPRODUCE MAIN BROADCAST
DATA FROM WHERE IMAGES
ARE SYNCHRONIZED

POWER
ON

OFF

t0　t1　t2　t3　t4 t5 t6　　t7

TIME

ZAPPING
PERIOD

TIME SLICE
RECEPTION PERIOD

START OF ZAPPING
WHILE VIEWING SERVICE 1

SERVICE 4 SELECTED

Fig. 19

20

21
UI

OPERATING MODE

29
MODE INDICATION UNIT

USER SELECTS CHANNEL

22
RECEPTION CONTROL UNIT

DESIGNATION OF REPRODUCTION METHOD

28
MPEG-4 DECODER

32
SW

VIDEO OUTPUT
AUDIO OUTPUT

CONTROL COMMAND

CHANNEL SELECTION INFORMATION

PROGRAM INFORMATION

IP ADDRESS COMMAND

HIGH QUALITY DATA

27
BUFFER

STILL IMAGE

34
ZAPPING BUFFER

OFDM SIGNAL

24
OFDM DEMODULATION UNIT

TS DECODER

25

IP PACKET EXTRACTION UNIT

Δt

26

IP PACKET

POWER SUPPLY CONTROL

POWER SUPPLY CONTROL UNIT

23

DATA FLOW
CONTROL INFORMATION FLOW

EP 1 684 450 A2

# Fig.20

MAIN BROADCAST DATA BURST
(MPEG4 OVER IP OVER TS)
BURST SIZE     1.75Mbit
BURST BW       15Mbps
CONSTANT BW   350kbps

BANDWIDTH

S1
S2  S4  S1  S3
S3  S3  S5  S2  S4  S5

15Mbps

TIME

POWER ON

POWER OFF

TIME

# Fig.21

Fig.22